# EUROPEAN PATENT APPLICATION

(11) **EP 4 723 762 A1**
(43) Date of publication of application: **08.04.2026**
(21) Application number: 23937970.4
(22) Date of filing: 24.05.2023
(51) Int. Cl.: H04W 64/00

(54) **POSITIONING METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: GONG, Yubing, Beijing 100085 (CN); MAO, Yuxin, Beijing 100085 (CN); SHEN, Yang, Beijing 100085 (CN)
(74) Representative: Gunzelmann, Rainer
(86) International application number: PCT/CN2023/096142
(87) International publication number: WO 2024/239296

(57) **Abstract**

Provided in the present disclosure are a positioning method and apparatus, and a device and a storage medium. The method comprises: when a first terminal cannot communicate with a first network element and the assistance of the first network element is required to complete a positioning process of the first terminal, the first terminal selecting a third terminal from among at least one second terminal, which is discovered by the first terminal, wherein the third terminal can communicate with the first network element; and sending first information to the third terminal, wherein the first information is used for requesting the third terminal to initiate a first flow to the first network element, and the first flow is used for determining a positioning measurement result of the first terminal. By means of the method provided in the embodiments of the present disclosure, when a first terminal cannot communicate with a first network element, it is possible to ensure that a positioning measurement of the first terminal is successfully implemented.

## Description

### TECHNICAL FIELD

The present disclosure relates to the field of communication technology, and specifically to a positioning method and apparatus, a communication device, a communication system, and a storage medium.

### BACKGROUND

In a communication system, it is usually required to perform positioning measurement on a terminal. Optionally, when performing the positioning measurement on the terminal, assistance of a core network device is usually required.

### SUMMARY

The present disclosure provides a positioning method and apparatus, a communication device, a communication system, and a storage medium.

According to a first aspect of embodiments of the present disclosure, a positioning method is provided, including:
selecting, by the first terminal, a third terminal from at least one second terminal discovered by the first terminal, in which the first terminal is incapable of communicating with a first network element and requires assistance of the first network element to complete a positioning procedure of the first terminal, and the third terminal is capable of communicating with the first network element; and
sending first information to the third terminal, in which the first information is used to request the third terminal to initiate a first procedure to the first network element, and the first procedure is used to determine a positioning measurement result of the first terminal.

According to a second aspect of the embodiments of the present disclosure, a positioning method is provided, including:
receiving first information sent by a first terminal, in which the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal.

According to a third aspect of the embodiments of the present disclosure, a positioning method is provided, including:
receiving a second request sent by a third terminal, in which the second request is used to initiate a first procedure to the first network element, the first procedure is used to determine a positioning measurement result of a first terminal, the first terminal is incapable of communicating with the first network element.

According to a fourth aspect of the embodiments of the present disclosure, a positioning method is provided, including:
receiving a fourth request sent by a first network element, in which the fourth request is used to request a positioning measurement result of a first terminal, the first terminal is incapable of communicating with the first network element.

According to a fifth aspect of the embodiments of the present disclosure, a positioning method is provided, including:
sending, by a third terminal, a second request to a network device, wherein the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

According to a sixth aspect of the embodiments of the present disclosure, a positioning method is provided, including:
receiving a second request sent by a third terminal, wherein the second request is used to initiate a first procedure to a core network device, the first procedure is used to determine a positioning measurement result of a first terminal, the first terminal is incapable of communicating with the core network device.

According to a seventh aspect of the embodiments of the present disclosure, a first communication apparatus is provided, including:
sending, by a third terminal, a second request to a network device, wherein the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

According to an eighth aspect of the embodiments of the present disclosure, a second communication apparatus is provided, including:
a receiving module, configured to receive first information sent by a first terminal, wherein the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal.

According to a ninth aspect of the embodiments of the present disclosure, a third communication apparatus is provided, including:
a receiving module, configured to receive a second request sent by a third terminal, wherein the second request is used to initiate a first procedure to the first network element, the first procedure is used to determine a positioning measurement result of a first terminal, the first terminal is incapable of communicating with a first network element.

According to a tenth aspect of the embodiments of the present disclosure, a fourth communication apparatus is provided, including:
a receiving module, configured to receive a fourth request sent by a first network element, wherein the fourth request is used to request a positioning measurement result of a first terminal, the first terminal is incapable of communicating with the first network element.

According to an eleventh aspect of the embodiments of the present disclosure, a communication device is provided, including:
one or more processors;
in which the processor is configured to call instructions to cause the communication device to perform the positioning method according to any of the first aspect or the second aspect.

According to a twelfth aspect of the embodiments of the present disclosure, a communication system is provided. The communication system includes a terminal and a network device. The terminal is configured to perform the positioning method according to the first aspect, and the network device is configured to perform the positioning method according to the second aspect, the network device is configured to perform the positioning method according to the third aspect, the network device is configured to perform the positioning method according to the fourth aspect.

According to a thirteenth aspect of the embodiments of the present disclosure, a storage medium having instructions stored thereon is provided. When the instructions are executed on a communication device, the communication device is caused to perform the positioning method according to any of the first aspect to the fourth aspect.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1A is a schematic diagram of a communication system according to an embodiment of the present disclosure;
FIG. 1B is an interactive flowchart of a positioning method according to an embodiment of the present disclosure;
FIG. 1C is an interactive flowchart of a positioning method according to an embodiment of the present disclosure;
FIGs. 2A-2E each shows an interactive flowchart of a positioning method according to an embodiment of the present disclosure;
FIG. 3 is a flowchart of a positioning method according to an embodiment of the present disclosure;
FIG. 4 is a flowchart of a positioning method according to an embodiment of the present disclosure;
FIG. 5 is a flowchart of a positioning method according to an embodiment of the present disclosure;
FIG. 6 is a flowchart of a positioning method according to an embodiment of the present disclosure;
FIG. 7 is a flowchart of a positioning method according to an embodiment of the present disclosure;
FIG. 8A is a flowchart of a positioning method according to an embodiment of the present disclosure;
FIG. 8B is a flowchart of a positioning method according to an embodiment of the present disclosure;
FIG. 9A is a block diagram of a first communication apparatus according to an embodiment of the present disclosure;
FIG. 9B is a block diagram of a second communication apparatus according to an embodiment of the present disclosure;
FIG. 9C is a block diagram of a third communication apparatus according to an embodiment of the present disclosure;
FIG. 9D is a block diagram of a fourth communication apparatus according to an embodiment of the present disclosure;
FIG. 10A is a block diagram of a communication device according to an embodiment of the present disclosure; and
FIG. 10B is a block diagram of a chip according to an embodiment of the present disclosure.

### DETAILED DESCRIPTION

The method disclosed in the present disclosure can be used to solve the technical problem of "how to perform positioning measurement on a terminal that cannot communicate with a core network device".

Embodiments of the present disclosure provide a positioning method and apparatus, a communication device, a communication system and a storage medium.

According to a first aspect of embodiments of the present disclosure, a positioning method is provided, including:
selecting, by a first terminal, a third terminal from at least one second terminal discovered by the first terminal, in which the first terminal is incapable of communicating with a first network element and requires assistance of the first network element to complete a positioning procedure of the first terminal, and the third terminal is capable of communicating with the first network element; and
sending first information to the third terminal, in which the first information is used to request the third terminal to initiate a first procedure to the first network element, and the first procedure is used to determine a positioning measurement result of the first terminal.

In the above embodiment, when the first terminal cannot communicate with the first network element and requires the assistance of the first network element to complete the positioning procedure of the first terminal, the first terminal selects the third terminal from at least one second terminal discovered by it, and sends the first information to the third terminal to instruct the third terminal to replace the first terminal to initiate the first procedure to the first network element, so as to achieve positioning measurement of the first terminal. It can be seen that for the first terminal that cannot communicate with the first network element, the embodiment of the present disclosure provides a method for selecting a third terminal to replace the first terminal to initiate the first procedure, so that the first terminal can successfully select the third terminal and the third terminal initiates the first procedure, thereby ensuring successful implementation of the positioning measurement of the first terminal.

In combination with some embodiments of the first aspect, in some embodiments, the method further includes:
receiving second information sent by all or part of the at least one second terminal, in which the second information includes at least one of:
a positioning capability of the second terminal;
a first indication indicating whether the second terminal is capable of communicating with the first network element;
a second indication indicating whether the second terminal knows an absolute position of the second terminal;
an absolute position of the second terminal; or
a network element identifier corresponding to a second network element.

In combination with some embodiments of the first aspect, in some embodiments, selecting the third terminal from the at least one second terminal discovered by the first terminal includes:
selecting a terminal among the at least one second terminal that is capable of communicating with the first network element as the third terminal; or
determining a second terminal among the at least one second terminal that is capable of communicating with the first network element and sends second information including a network element identifier the same as a network element identifier of a second network element stored in the first terminal as the third terminal.

In the above embodiment, some or all of second terminals may send the second information to the first terminal, and the first terminal may select the third terminal from the second terminals based on the second information sent by the second terminals, thereby ensuring that the first terminal can accurately select the third terminal that is most suitable for replacing the first terminal to initiate the first procedure, and ensuring that the subsequent first procedure can be executed stably, and further ensuring stability of the positioning measurement.

In combination with some embodiments of the first aspect, in some embodiments, the method further includes at least one of:
selecting at least one fourth terminal from the at least one second terminal based on the second information, in which a fourth terminal is used to implement a positioning measurement for the first terminal, and the fourth terminal satisfies at least one of:
being capable of communicating with the first network element; or
an absolute position of the fourth terminal being known.

In the above embodiment, the first terminal may select at least one fourth terminal from at least one second terminal based on the second information sent by the at least one second terminal, in which the fourth terminal can be understood as a positioning terminal required in the positioning procedure, and is used to implement the positioning measurement of a target terminal (i.e., the first terminal) to be measured. It can be seen that the present disclosure ensures successful execution of the positioning measurement of the first terminal by selecting the fourth terminal to implement the measurement of the first terminal. Moreover, in the present disclosure, the fourth terminal is selected based on the second information sent by the second terminal, which can ensure that the first terminal can select the most suitable fourth terminal, thereby ensuring accuracy of the positioning measurement.

In combination with some embodiments of the first aspect, in some embodiments, requiring the assistance of the first network element to complete the positioning procedure of the first terminal includes at least one of:
requiring the first network element to select a second network element, in which the second network element is used to send third information for assisting positioning;
requiring the first network element to select a second network element, in which the second network element is used to calculate the positioning measurement result of the first terminal; or
requiring the first network element to send the positioning measurement result of the first terminal to a third network element.

In combination with some embodiments of the first aspect, in some embodiments, the first information includes at least one of:
a first requirement, in which the first requirement includes at least one of: a category, an accuracy, or a response time of the first requirement;
a terminal identifier of the first terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal; or
a positioning capability of a fourth terminal.

In combination with some embodiments of the first aspect, in some embodiments, the first requirement is a service quality requirement during a positioning measurement, the category of the first requirement indicates a degree of strictness of the service quality requirement during the positioning measurement, the accuracy indicates an accuracy requirement during the positioning measurement, and the response time indicates a response requirement during the positioning measurement.

In the above embodiment, by making the first information include the above content, the third terminal can fully understand the positioning measurement requirement of the first terminal, so that the third terminal can more accurately replace the first terminal to initiate the first procedure, thereby ensuring accuracy of the positioning measurement.

In combination with some embodiments of the first aspect, in some embodiments, the method further includes:
obtaining measurement data by communicating with at least one fourth terminal to perform the positioning measurement.

In combination with some embodiments of the first aspect, in some embodiments, the method further includes:
calculating the positioning measurement result of the first terminal based on at least one of the measurement data or the absolute position of the fourth terminal, in which the calculation entity for calculating the positioning measurement result of the first terminal is the first terminal.

In the above embodiment, the first terminal communicates with the fourth terminal to obtain the measurement data, and calculates the positioning measurement result of the first terminal based on at least one of the measurement data or the absolute position of the fourth terminal, which achieves smooth execution of the positioning measurement of the first terminal.

In combination with some embodiments of the first aspect, in some embodiments, the method further includes:
receiving third information for assisting positioning sent by the third terminal, in which the calculation entity for calculating the positioning measurement result of the first terminal is the first terminal; and
calculating the positioning measurement result of the first terminal based on at least one of the measurement data, the third information or the absolute position of the fourth terminal.

In the above embodiment, the first terminal may receive the third information for assisting positioning sent by the third terminal, and calculate the positioning measurement result of the first terminal based on at least one of the measurement data, the third information, or the absolute position of the fourth terminal, which realizes smooth execution of the positioning measurement of the first terminal.

In combination with some embodiments of the first aspect, in some embodiments, the method further includes:
sending the positioning measurement result of the first terminal to the third terminal, in which the positioning measurement result of the first terminal needs to be sent to a third network element.

In the above embodiment, the first terminal sends the positioning measurement result of the first terminal to the third terminal, so that the third terminal forwards the positioning measurement result to the third network element, which ensures that the third network element can obtain the positioning measurement result of the first terminal.

In combination with some embodiments of the first aspect, in some embodiments, the method further includes:
sending at least one of the measurement data or the absolute position of the fourth terminal to the third terminal, in which the calculation entity for calculating the positioning measurement result of the first terminal is not the first terminal; and
receiving the positioning measurement result of the first terminal sent by the third terminal.

In the above embodiment, the first terminal sends at least one of the measurement data obtained or the absolute position of the fourth terminal to the third terminal, so that the third terminal calculates the measurement result of the first terminal and then transmits it back to the first terminal, or so that the third terminal forwards at least one of the measurement data or the absolute position of the fourth terminal to the second network element, and the second network element calculates the measurement result of the first terminal and then transmits it back to the first terminal via the third terminal, thereby realizing smooth execution of the positioning measurement of the first terminal.

In combination with some embodiments of the first aspect, in some embodiments, the method further includes:
receiving a first request sent by the third terminal, in which the first request is used to request at least one of the positioning measurement result of the first terminal, the measurement data, or the absolute position of the fourth terminal.

In the above embodiment, the third terminal sends the first request to the first terminal to request at least one of the measurement data or the absolute position of the fourth terminal from the first terminal, so that the third terminal can calculate the measurement result of the first terminal based on at least one of the measurement data or the absolute position of the fourth terminal and then transmit it back to the first terminal, or so that the third terminal can forward at least one of the measurement data or the absolute position of the fourth terminal to the second network element, and the second network element calculates the measurement result of the first terminal and then transmits it back to the first terminal via the third terminal, thereby realizing smooth execution of the positioning measurement of the first terminal. Alternatively, in the above embodiment, the third terminal sends the first request to the first terminal to request from the first terminal the positioning measurement result of the first terminal, so that the third terminal can forward the positioning measurement result of the first terminal to the third network element, thereby ensuring that the third network element can provide positioning-based services.

In combination with some embodiments of the first aspect, in some embodiments, the method further includes:
exchanging, by the first terminal, at least one of the first information, measurement data, an absolute position of a fourth terminal, or the positioning measurement result with the third terminal based on a first protocol.

In combination with some embodiments of the first aspect, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

**In** the above embodiment, the protocol to be complied when the first terminal exchanges at least one of the first information, the measurement data, the absolute position of the fourth terminal, or the positioning measurement result with the third terminal is defined, thereby ensuring that the first terminal can successfully exchange at least one of the first information, the measurement data, the absolute position of the fourth terminal, or the positioning measurement result with the third terminal, and ensuring successful execution of the positioning measurement.

According to a second aspect of embodiments of the present disclosure, a positioning method is provided, including:
receiving first information sent by a first terminal, in which the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal

In the above embodiment, when the first terminal cannot communicate with the first network element and requires the assistance of the first network element to complete the positioning procedure of the first terminal, the first terminal may select the third terminal and send the first information to the third terminal to instruct the third terminal to replace the first terminal to initiate the first procedure to the first network element, so as to achieve the positioning measurement of the first terminal. It can be seen that for the first terminal that cannot communicate with the first network element, the embodiment of the present disclosure provides a method for selecting a third terminal to replace the first terminal to initiate the first procedure, so that the first terminal can successfully select the third terminal and the third terminal can initiate the first procedure, thereby ensuring successful implementation of the positioning measurement of the first terminal.

In combination with some embodiments of the second aspect, in some embodiments, the third terminal is selected by the terminal from at least one second terminal discovered by the first terminal;
the third terminal is a terminal among the at least one second terminal that is capable of communicating with the first network element; or
the third terminal is a terminal among the at least one second terminal that is capable of communicating with the first network element and sends second information including a network element identifier the same as a network element identifier of a second network element stored in the first terminal.

In combination with some embodiments of the second aspect, in some embodiments, the first information includes at least one of:
a first requirement, in which the first requirement includes at least one of: a category, an accuracy, or a response time of the first requirement;
a terminal identifier of the first terminal;
a terminal identifier of a fourth terminal;
**a** third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal; or
a positioning capability of a fourth terminal.

In combination with some embodiments of the second aspect, in some embodiments, the method further includes at least one of:
determining, by the third terminal, to initiate the first procedure; or
sending, by the third terminal, a second request to the first network element, in which the second request is used to initiate the first procedure to the first network element.

In combination with some embodiments of the second aspect, in some embodiments, the second request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
**a** third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal;
a positioning capability of the third terminal; or
a network element identifier corresponding to a second network element with which the third terminal is capable of communicating.

**In** combination with some embodiments of the second aspect, in some embodiments, the method further includes:
receiving third information for assisting positioning sent by the second network element.

In combination with some embodiments of the second aspect, in some embodiments, the method further includes:
sending the third information to the first terminal, in which the calculation entity for calculating the positioning measurement result of the first terminal is the first terminal.

In combination with some embodiments of the second aspect, in some embodiments, the method further includes:
receiving the positioning measurement result of the first terminal sent by the first terminal, in which the positioning measurement result of the first terminal needs to be sent to a third network element; and
sending the positioning measurement result of the first terminal to the second network element.

In combination with some embodiments of the second aspect, in some embodiments, the method further includes:
receiving at least one of measurement data or an absolute position of a fourth terminal sent by the first terminal, in which the calculation entity for calculating the positioning measurement result of the first terminal is the third terminal;
calculating the positioning measurement result of the first terminal based on at least one of the measurement data, third information or the absolute position of the fourth terminal; and
sending the positioning measurement result of the first terminal to the first terminal.

In combination with some embodiments of the second aspect, in some embodiments, the method further includes:
sending the positioning measurement result of the first terminal to the second network element, in which the positioning measurement result of the first terminal needs to be sent to a third network element.

In combination with some embodiments of the second aspect, in some embodiments, the method further includes:
receiving at least one of measurement data or an absolute position of a fourth terminal sent by the first terminal, in which the calculation entity for calculating the positioning measurement result of the first terminal is the second network element;
sending the at least one of the measurement data or the absolute position of the fourth terminal to the second network element;
receiving the positioning measurement result of the first terminal sent by at least one of the second network element or the first network element; and
sending the positioning measurement result of the first terminal to the first terminal.

In combination with some embodiments of the second aspect, in some embodiments, the method further includes at least one of:
receiving a third request sent by the second network element, in which the third request is used to request at least one of the positioning measurement result of the first terminal, measurement data, or an absolute position of a fourth terminal; or
sending a first request to the first terminal, in which the first request is used to request at least one of the positioning measurement result of the first terminal, measurement data, or an absolute position of a fourth terminal.

In combination with some embodiments of the second aspect, in some embodiments, the method further includes at least one of:
exchanging, by the third terminal, at least one of the first information, measurement data, an absolute position of a fourth terminal, or the positioning measurement result with the first terminal based on a first protocol; or
exchanging, by the third terminal, at least one of measurement data, an absolute position of a fourth terminal, or the positioning measurement result with a second network element based on a first protocol.

In combination with some embodiments of the second aspect, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

According to a third aspect of embodiments of the present disclosure, a positioning method is provided, including:
receiving a second request sent by a third terminal, in which the second request is used to initiate a first procedure to the first network element, the first procedure is used to determine a positioning measurement result of a first terminal, the first terminal is incapable of communicating with the first network element.

In combination with some embodiments of the third aspect, in some embodiments, the second request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal;
a positioning capability of the third terminal; or
a network element identifier corresponding to a second network element with which the third terminal is capable of communicating.

In combination with some embodiments of the third aspect, in some embodiments, the method further includes:
sending a fourth request to a second network element, in which the fourth request is used to request the positioning measurement result of the first terminal.

In combination with some embodiments of the third aspect, in some embodiments, sending the fourth request to the second network element includes:
sending the fourth request to the second network element with which the third terminal is capable of communicating.

In combination with some embodiments of the third aspect, in some embodiments, the fourth request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal; or
a positioning capability of the third terminal.

In combination with some embodiments of the third aspect, in some embodiments, the method further includes at least one of:
receiving the positioning measurement result of the first terminal sent by a second network element;
sending the positioning measurement result of the first terminal to the third terminal; or
sending the positioning measurement result of the first terminal to the third network element, in which the positioning measurement result of the first terminal needs to be sent to a third network element.

According to a fourth aspect of embodiments of the present disclosure, a positioning method is provided, including:
receiving a fourth request sent by a first network element, in which the fourth request is used to request a positioning measurement result of a first terminal, the first terminal is incapable of communicating with the first network element.

**In** combination with some embodiments of the fourth aspect, in some embodiments, the fourth request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal; or
a positioning capability of the third terminal.

In combination with some embodiments of the fourth aspect, in some embodiments, the method further includes:
sending third information for assisting positioning a third terminal.

In combination with some embodiments of the fourth aspect, in some embodiments, the method further includes:
sending a third request to a third terminal, in which the calculation entity for calculating the positioning measurement result of the first terminal is the first terminal or the third terminal, the positioning measurement result of the first terminal needs to be sent to a third network element, and the third request is used to request the positioning measurement result of the first terminal;
receiving the positioning measurement result of the first terminal sent by the third terminal; and
sending the positioning measurement result of the first terminal to the first network element.

**In** combination with some embodiments of the fourth aspect, in some embodiments, the method further includes:
sending a third request to a third terminal, in which the calculation entity for calculating the positioning measurement result of the first terminal is a second network element, and the third request is used to request at least one of measurement data or an absolute position of a fourth terminal;
receiving the at least one of the measurement data or the absolute position of the fourth terminal sent by the third terminal;
calculating the positioning measurement result of the first terminal based on at least one of the measurement data, third information or the absolute position of the fourth terminal; and
sending the positioning measurement result of the first terminal to the third terminal.

In combination with some embodiments of the fourth aspect, in some embodiments, the method further includes:
sending the positioning measurement result of the first terminal to the first network element, in which the positioning measurement result of the first terminal needs to be sent to a third network element.

In combination with some embodiments of the fourth aspect, in some embodiments, the method further includes:
exchanging, by the second network element, at least one of measurement data, an absolute position of a fourth terminal, or the positioning measurement result with the third terminal based on a first protocol.

In combination with some embodiments of the fourth aspect, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

According to a fifth aspect of embodiments of the present disclosure, a positioning method is provided, including:
sending, by a third terminal, a second request to a network device, in which the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

In combination with some embodiments of the fifth aspect, in some embodiments, the method further includes:
sending, by the network device, third information for assisting positioning to the third terminal.

In combination with some embodiments of the fifth aspect, in some embodiments, the method further includes:
determining, by the third terminal, at least one of the positioning measurement result of the first terminal or an absolute position of a fourth terminal; and
sending, by the third terminal, the at least one of the positioning measurement result of the first terminal or the absolute position of the fourth terminal to the network device.

In combination with some embodiments of the fifth aspect, in some embodiments, the method further includes:
determining at least one of measurement data or an absolute position of a fourth terminal;
sending the at least one of the measurement data or the absolute position of the fourth terminal to the network device; and
receiving the positioning measurement result of the first terminal sent by the network device.

In combination with some embodiments of the fifth aspect, in some embodiments, the method further includes at least one of:
receiving a third request sent by the network device, in which the third request is used to request at least one of the positioning measurement result of the first terminal, the measurement data, or the absolute position of the fourth terminal.

In combination with some embodiments of the fifth aspect, in some embodiments, the method further includes at least one of:
exchanging, by the third terminal, at least one of measurement data, an absolute position of a fourth terminal, or the positioning measurement result with the network device based on a first protocol.

In combination with some embodiments of the fifth aspect, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

According to a sixth aspect of embodiments of the present disclosure, a positioning method is provided, including:
receiving a second request sent by a third terminal, in which the second request is used to initiate a first procedure to a core network device, the first procedure is used to determine a positioning measurement result of a first terminal, the first terminal is incapable of communicating with the core network device and requires assistance of the first network element to complete a positioning procedure of the first terminal.

In combination with some embodiments of the sixth aspect, in some embodiments, the method further includes:
sending third information for assisting positioning to the third terminal.

In combination with some embodiments of the sixth aspect, in some embodiments, the method further includes:
sending a third request to the third terminal, in which the third request is used to request the positioning measurement result of the first terminal; and
receiving the positioning measurement result of the first terminal sent by the third terminal.

In combination with some embodiments of the sixth aspect, in some embodiments, the method further includes:
sending a third request to the third terminal, in which the third request is used to request at least one of measurement data or an absolute position of a fourth terminal;
receiving the at least one of the measurement data or the absolute position of the fourth terminal sent by the third terminal;
calculating the positioning measurement result of the first terminal based on at least one of the measurement data, the absolute position of the fourth terminal, or third information; and
sending the positioning measurement result of the first terminal to the third terminal.

In combination with some embodiments of the sixth aspect, in some embodiments, the method further includes:
exchanging, by the core network device, at least one of measurement data, an absolute position of a fourth terminal, or the positioning measurement result with the third terminal based on a first protocol.

In combination with some embodiments of the sixth aspect, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

According to a seventh aspect of the embodiments of the present disclosure, a first communication apparatus is provided, including:
a determining module, configured to select a third terminal from at least one second terminal discovered by the first terminal, in which the first terminal is incapable of communicating with a first network element and requires assistance of the first network element to complete a positioning procedure of the first terminal, and the third terminal is capable of communicating with the first network element; and
a sending module, configured to send first information to the third terminal, in which the first information is used to request the third terminal to initiate a first procedure to the first network element, and the first procedure is used to determine a positioning measurement result of the first terminal.

According to an eighth aspect of the embodiments of the present disclosure, a second communication apparatus is provided, including:
a receiving module, configured to receive first information sent by a first terminal, in which the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal.

According to a ninth aspect of the embodiments of the present disclosure, a third communication apparatus is provided, including:
a receiving module, configured to receive a second request sent by a third terminal, in which the second request is used to initiate a first procedure to the first network element, the first procedure is used to determine a positioning measurement result of a first terminal, the first terminal is incapable of communicating with a first network element.

According to a tenth aspect of the embodiments of the present disclosure, a fourth communication apparatus is provided, including:
a receiving module, configured to receive a fourth request sent by a first network element, in which the fourth request is used to request a positioning measurement result of a first terminal, the first terminal is incapable of communicating with the first network element.

According to an eleventh aspect of the embodiments of the present disclosure, a communication device is provided, including: one or more processors, and one or more memories for storing instructions; in which the processor is configured to call the instructions to cause the communication device to perform the positioning method of the first aspect, the second aspect, the third aspect or the fourth aspect, the processor is configured to call the instructions to cause the communication device to perform the positioning method of alternative implementations of the first aspect, the second aspect, the third aspect or the fourth aspect.

According to a twelfth aspect of the embodiments of the present disclosure, a communication system is provided, including: a terminal, and a network device. The terminal is configured to perform the positioning method of the first aspect, the second aspect, alternative implementations of the first aspect, or alternative implementations of the second aspect; and the network device is configured to perform the positioning method of the third aspect, the fourth aspect, alternative implementations of the third aspect, or alternative implementations of the fourth aspect.

According to a thirteenth aspect of the embodiments of the present disclosure, a storage medium for storing instructions is provided. When the instructions are executed on a communication device, the communication device is caused to perform the positioning method of the first aspect, alternative implementations of the first aspect, the second aspect, the third aspect, the fourth aspect, alternative implementations of the second aspect, alternative implementations of the third aspect or alternative implementations of the fourth aspect.

According to a fourteenth aspect of the embodiments of the present disclosure, a program product is provided. When the program product is executed on a communication device, the communication device is caused to perform the positioning method of the first aspect, alternative implementations of the first aspect, the second aspect, the third aspect, the fourth aspect, alternative implementations of the second aspect, alternative implementations of the third aspect or alternative implementations of the fourth aspect.

According to a fifteenth aspect of the embodiments of the present disclosure, a computer program is provided. When the computer program is running on a computer, the computer is caused to perform the positioning method of the first aspect, alternative implementations of the first aspect, the second aspect, the third aspect, the fourth aspect, alternative implementations of the second aspect, alternative implementations of the third aspect or alternative implementations of the fourth aspect.

It can be understood that the first communication apparatus, the second communication apparatus, the third communication apparatus, the fourth communication apparatus, the communication device, the communication system, the storage medium, the program product, and the computer program are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose the title of the present disclosure. In some embodiments, the terms such as positioning method, information processing method, information sending method, information receiving method, etc. can be replaced with each other, the terms such as positioning apparatus, information processing apparatus, information sending apparatus, information receiving apparatus etc. can be replaced with each other, and the terms such as information processing system, communication system, information sending system, information receiving system etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In the embodiments of the present disclosure, descriptions such as "at least one of A, B, C...", "A and/or B and/or C...", etc. include the case where any one of A, B, C... exists alone, and also include any combination of any multiple ones of A, B, C..., and each case may exist alone. For example, "at least one of A, B, or C" includes the case where A exists alone, the case where B exists alone, the case where C exists alone, the combination of A and B, the combination of A and C, the combination of B and C, and the combination of A, B, and C. For example, A and/or B includes the case where A exists alone, the case where B exists alone, and the combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

**In** some embodiments, the terms such as "in response to...", "in response to determining...", "in the case of...", "at the time of...", "when...", "if...", "provide that...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus, etc. can be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" can be used interchangeably.

In some embodiments, the term "network" can be understood as apparatuses included in the network, such as an access network device, a core network device or the like.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device can be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal can be set to have a structure that has all or part of functions of the access network device. In addition, the language such as "uplink" and "downlink" can also be replaced by the language corresponding to the communication between the terminals (for example, "side"). For example, the uplink channel, the downlink channel, etc. can be replaced by the side channel, and the uplink, the downlink, etc. can be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

The correspondences shown in tables in the present disclosure can be configured or predefined. The values of information in each table are only examples and can be configured to other values, which are not limited in the present disclosure. When configuring the correspondence between information and each parameter, it is not necessarily required to configure all the correspondences illustrated in each table. For example, in the table in the present disclosure, the correspondences shown in some rows may not be configured. For another example, appropriate deformation adjustments can be made based on the above table, such as splitting, merging, etc. The names of parameters shown in the titles of the above tables may also use other names that can be understood by the communication device, and the values or representations of the parameters may also be other values or representations that can be understood by the beam management apparatus. When implementing the above tables, other data structures may also be used, such as arrays, queues, containers, stacks, linear lists, pointers, linked lists, trees, graphs, structures, classes, heaps, hash tables or hash tables, etc.

The term "predefined" in the present disclosure may be understood as defined, predefined, stored, pre-stored, pre-negotiated, pre-configured, solidified, or pre-burned.

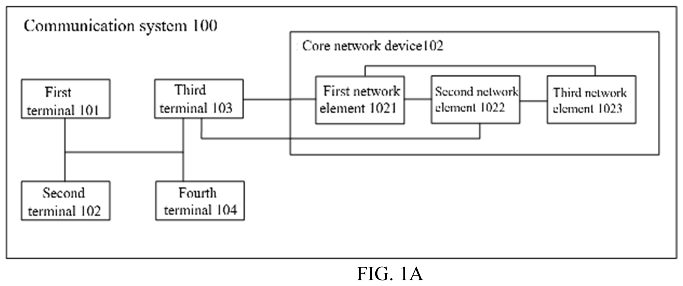

**FIG.** 1A is a schematic diagram of a communication system according to an embodiment of the present disclosure. As shown in FIG. 1A, the communication system 100 may include a first terminal 101, a second terminal 102, a third terminal 103, a fourth terminal 104, and a core network device 102.

In some embodiments, the first terminal 101, the second terminal 102, the third terminal 103, the fourth terminal 104, for example, each may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the core network device 102 may be a device including a first network element 1021, a second network element 1022, a third network element 1023, etc., or may be a plurality of devices or a device group, including all or part of the first network element 1021, the second network element 1022, the third network element 1023, etc. The network element may be virtual or physical. The core network may include, for example, at least one of an evolved packet core (EPC), a 5G core network (5GCN), or a next generation core (NGC).

In some embodiments, the first network element 1021 is, for example, an access and mobility management function (AMF).

In some embodiments, the first network element 1021 is used to perform registration, connection, reachability, and mobility management, provide a session management message transmission channel for the device, and provide authentication and authorization functions for the terminal when accessing. The first network element may be an access point for the terminal accessing a wireless core network control plane. The name is not limited to thereto.

In some embodiments, the second network element 1022 is, for example, a location management function (LMF).

In some embodiments, the second network element 1022 is used to manage links and resources between network elements when the user accessing the network, and the name is not limited thereto.

In some embodiments, the third network element 1023 is, for example, any one of the following: an application function (AF), a location service client (LCS client), a gateway mobile location center (GMLC), or a network exposure function (NEF).

In some embodiments, the third network element 1023 is used to provide position-based services, and the name is not limited thereto.

Optionally, in some embodiments, the above-mentioned terminals (such as the first terminal 101, the second terminal 102, the third terminal 103, and the fourth terminal 104) and the above-mentioned core network devices (such as the first network element 1021, the second network element 1022, and the third network element 1023) can communicate via access network devices.

In some embodiments, the functions implemented by at least one of the first network element 1021, the second network element 1022, or the third network element 1023 may also be implemented by an access network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1A, but are not limited thereto. The entities shown in FIG. 1A are examples, and the communication system may include all or part of the subjects in FIG. 1A, or may include other entities other than those shown in FIG. 1A, and the number and form of the subjects are arbitrary, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other positioning methods, and next-generation systems based on them. In addition, multiple systems can also be combined (for example, a combination of LTE or LTE-A and 5G, etc.) for application.

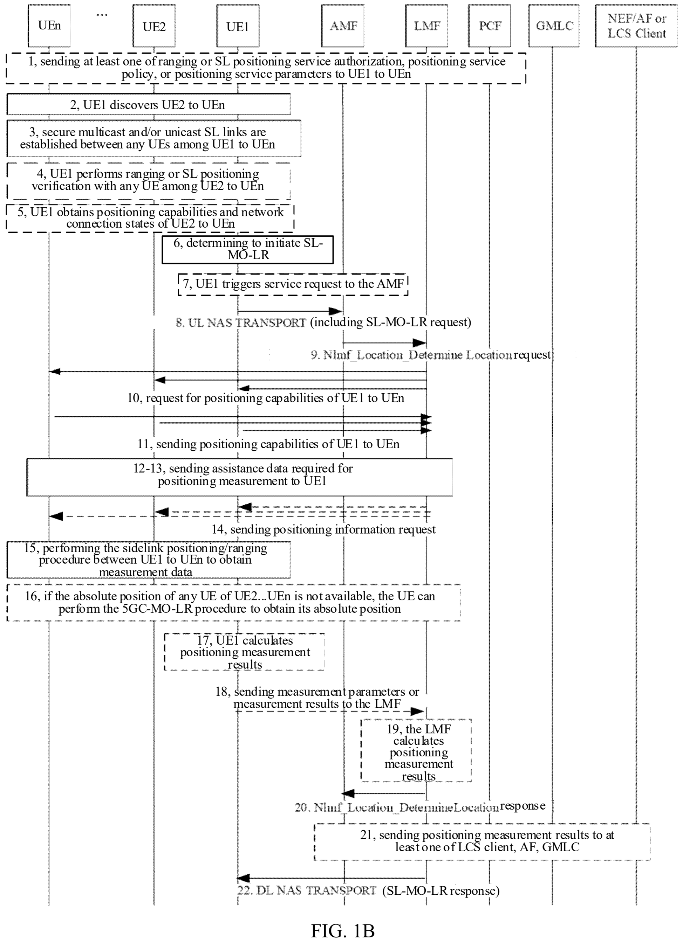

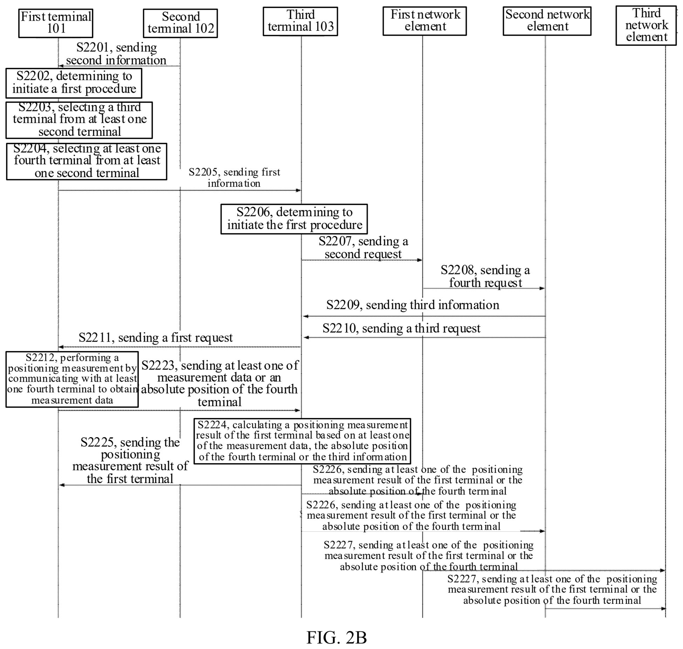

Optionally, in some embodiments, when performing positioning and measurement for the terminal, the assistance of the core network device is required. The following positioning procedure is usually used to implement positioning measurement of the terminal. FIG. 1B is an interactive flowchart of a positioning method provided in an embodiment of the present disclosure. Optionally, the premise of the method shown in FIG. 1B is that the terminal to be positioned and measured can communicate with the core network device (such as AMF). Optionally, terminal 1 in FIG. 1B may be a target terminal (Target UE) that needs to be positioned and measured, and terminal 2 to terminal n in FIG. 2B may be located terminals (Located UE). Optionally, the located terminal may be understood as a terminal that knows its absolute position, and the target terminal communicates with the located terminal to measure a relative position of the target terminal and the located terminal, and determines a positioning measurement result of the target terminal (such as absolute position, orientation angle, etc.) based on the relative position combined with the absolute position of the located terminal. As shown in FIG. 1B, the positioning method may include the following steps.

Step 1, the AMF and/or LMF sends at least one of ranging or sidelink (SL) positioning service authorization, positioning service policy, positioning service parameters, or a quality of service (QoS) requirement to terminal 1 to terminal n.

Optionally, in some embodiments, the positioning service authorization, the positioning service policy, and the positioning service parameters can be used to authorize or indicate whether the terminal supports ranging or sidelink positioning services. Optionally, the QoS requirement can be a service quality requirement during positioning measurement. Optionally, the QoS requirement can include a category, an accuracy, and a response time of the QoS requirement. Optionally, the category of the QoS requirement is used to define a degree of strictness of the positioning service quality, and the degrees of strictness defined by different categories of QoS requirements are different. Optionally, the above-mentioned "category of QoS requirement" can include at least one of the following: Best Effort Class, Multiple QoS Class, or Assured Class; optionally, the degree of strictness of the positioning service quality defined by the category "Best Effort Class" is: the least strict; the degree of strictness of the positioning service quality defined by the category "Multiple QoS Class" is: moderately strict; the degree of strictness of the positioning service quality defined by the category "Assured Class" is: the most strict. Optionally, the above-mentioned "accuracy" can be used to indicate an accuracy requirement during the positioning measurement, and optionally, the accuracy can include horizontal accuracy and vertical accuracy during the positioning measurement. Optionally, the above-mentioned "response time" can be used to indicate a response requirement during the positioning measurement, and optionally, the response time can include: no delay, low delay or delay tolerant.

Step 2, terminal 1 discovers terminal 2 to terminal n.

Step 3, secure multicast and/or unicast SL links are established between any terminals among terminal 1 to terminal n.

Optionally, terminal 1 may exchange ranging and sidelink positioning protocol (RSPP) messages with any terminal among terminal 2 to terminal n; any terminal among terminal 2 to terminal n may also exchange RSPP messages with each other through the established SL link.

Step 4, terminal 1 performs ranging or SL positioning verification with any terminal among terminal 2 to terminal n.

Optionally, terminal 1 can receive at least one of the ranging or SL positioning service authorization, the positioning service policy, the positioning service parameters, or the QoS requirement sent by any terminal among terminal 2 to terminal n through the SL link established in step 3. Terminal 1 can verify whether terminal 2 to terminal n support ranging or sidelink positioning services based on at least one of the ranging or SL positioning service authorization, the positioning service policy, or the positioning service parameter sent by each of terminal 2 to terminal n, and verify whether the QoS requirements of terminal 2 to terminal n match the QoS requirement of terminal 1 based on the QoS requirements sent by terminal 2 to terminal n.

Step 5, terminal 1 obtains positioning capabilities of terminal 2 to terminal n.

Optionally, terminal 1 may receive the positioning capabilities of terminal 2 to terminal n through the SL link established in step 3.

Step 6, terminal 1 determines to initiate SL-MO-LR.

Optionally, terminal 1 may determine to initiate SL-MO-LR based on the information received in step 4 and the positioning capability received in step 5. Optionally, when the information in step 4 indicates that at least one of terminal 2 to terminal n supports ranging or sidelink positioning services, and the QoS requirement of the at least one terminal matches the QoS requirement of terminal 1, and the at least one terminal of terminal 2 to terminal n also has the positioning capability, then terminal 1 determines to initiate SL-MO-LR to AMF, and the SL-MO-LR is used to determine a positioning measurement result of terminal 1.

Step 7, if terminal 1 is in a connection management-IDLE (CM-IDLE) state, terminal 1 triggers a service request to establish a connection with the AMF.

Step 8, terminal 1 sends an SL-MO-LR request to the AMF in an uplink non-access stratum (UL NAS TRANSPORT) message.

Optionally, the SL-MO-LR request may indicate at least one of the following:
identifiers of terminal 2 to terminal n, optionally, the identifier may be, for example, at least one of an application layer ID or a generic public subscription identifier (GPSI);
assistance data required for positioning measurement;
whether the LMF is required to provide positioning calculation assistance;
whether the positioning measurement result needs to be provided to at least one of the LCS client, AF, or GMLC;
an identifier of at least one of the LCS client, the AF, or the GMLC;
a desired type of the positioning measurement result; optionally, the type of the positioning measurement result may include, for example: an absolute position of terminal 1, a relative position of terminal 1 relative to any terminal among terminal 2 to terminal n, a distance between terminal 1 and any terminal among terminal 2 to terminal n, or a relative direction between terminal 1 and any terminal among terminal 2 to terminal n; or
a QoS requirement.

Step 9, the AMF selects the LMF and sends an Nlmf Location determine Location request to the LMF based on the SL-MO-LR request.

Optionally, the content indicated by the N1mf_Location_determine Location request sent by the AMF to the LMF includes the content indicated by the SL-MO-LR request in the above step 8.

Step 10, the LMF requests the positioning capability from terminal 1 to terminal n.

Step 11, terminal 1 to terminal n return their positioning capabilities to the LMF.

Optionally, terminal 1 and terminal n can return their respective positioning capabilities to the LMF respectively. Alternatively, terminal 2 to terminal n do not need to send their positioning capabilities to the LMF, but terminal 1 returns the positioning capabilities of terminal 2 to terminal n obtained in step 5 and terminal 1's own positioning capability to the LMF.

Step 12, terminal 1 requests assistance data required for positioning measurement from the LMF.

Optionally, the assistance data can help terminal 1 obtain the positioning measurement result.

Step 13, the LMF sends the requested assistance data to terminal 1.

Optionally, the positioning capabilities of terminal 1 to terminal n may also be included in the SL-MO-LR request of step 8. If terminal 1 includes the positioning capabilities of terminal 1 to terminal n in the SL-MO-LR request of step 8, steps 10 and 11 may be omitted. If terminal 1 includes the assistance data required for the positioning measurement in the SL-MO-LR request of step 8, step 12 may be omitted.

Step 14, if the SL-MO-LR request in step 8 indicates that the LMF needs to provide positioning calculation assistance and/or indicates that the positioning measurement result needs to be provided to at least one of the LCS client, the AF, or the GMLC, then the LMF sends a position information request to terminal 1 to terminal n.

Step 15, a side link positioning or ranging procedure between terminal 1 and terminal n is performed to obtain measurement data.

Step 16, if the absolute position of any terminal among terminal 2 to terminal n is not available, the terminal can perform the 5GC-MO-LR procedure to obtain its absolute position.

Optionally, since the absolute positions of terminal 2 to terminal n are needed to calculate the positioning measurement result of terminal 1, when the absolute position of any terminal among terminal 2 to terminal n is not available (for example, it can be understood that: terminal 2 to terminal n currently do not store their own absolute positions), the terminal needs to perform the 5GC-MO-LR procedure to obtain its absolute position.

Step 17, if the SL-MO-LR request of terminal 1 in step 8 indicates that the LMF does not need to provide positioning calculation assistance, or the calculation entity determined to be used to calculate the positioning measurement result is terminal 1, then terminal 1 calculates the positioning measurement result of terminal 1 based on the measurement parameter obtained in step 15.

Optionally, in some embodiments, if terminal 1 does not request the assistance data from the LMF in the aforementioned step, terminal 1 can directly calculate the positioning measurement result based on the measurement parameter obtained in step 15; if the terminal 1 requests the assistance data from the LMF in the aforementioned step, terminal 1 can calculate the positioning measurement result based on the measurement parameter obtained in the above step 15 and the assistance data obtained in step 13.

Step 18, if terminal 1 receives the position information request sent in the above step 14, terminal 1 sends the measurement parameter or measurement result to the LMF.

Optionally, when terminal 1 receives the position information request sent in the above step 14, it means that the SL-MO-LR request in step 8 indicates that the LMF needs to provide positioning calculation assistance and/or indicates that the positioning measurement result needs to be provided to at least one of the LCS client, the AF, or the GMLC. In this case, if the SL-MO-LR request in step 8 indicates that the LMF needs to provide positioning calculation assistance, then in this step 18, terminal 1 can send the measurement parameter obtained in step 15 to the LMF, so that the LMF can calculate the positioning measurement result of terminal 1 based on the measurement parameter; if the SL-MO-LR request in step 8 indicates that the LMF does not need to provide positioning calculation assistance, and indicates that the positioning measurement result needs to be provided to at least one of the LCS client, the AF, or the GMLC, then in this step 18, terminal 1 can send the positioning measurement result calculated in step 17 to the LMF, so that the LMF sends the positioning measurement result to at least one of the LCS client, the AF, or the GMLC.

Step 19, the LMF calculates the positioning measurement result.

Optionally, if the LMF receives the measurement parameter sent by the terminal, it means that the SL-MO-LR request in step 8 indicates that the LMF needs to provide positioning calculation assistance (that is, it means that the calculation entity determined to calculate the positioning measurement result is the LMF). In this case, the LMF can calculate the positioning measurement result of terminal 1 based on the measurement parameter. Optionally, the type of the positioning measurement result calculated by the LMF should be the type expected by the terminal indicated by the SL-MO-LR request in the above step 8.

Step 20, the LMF returns a N1mf_Location_determine Location response to the AFM, which includes the positioning measurement result calculated in step 19.

Step 21, the AMF sends the positioning measurement result to at least one of the LCS client, the AF, or the GMLC.

Optionally, if the SL-MO-LR request in step 8 indicates that the positioning measurement result needs to be provided to at least one of the LCS client, the AF, or the GMLC, the AMF sends the positioning measurement result to at least one of the LCS client, the AF, or the GMLC.

Step 22, the LMF sends an SL-MO-LR response to terminal 1 in a downlink non-access stratum transmission (DL NAS TRANSPORT) message, in which the response includes the positioning measurement result.

Optionally, if the LMF executes the above step 19, the LMF sends the positioning measurement result calculated in step 19 to terminal 1.

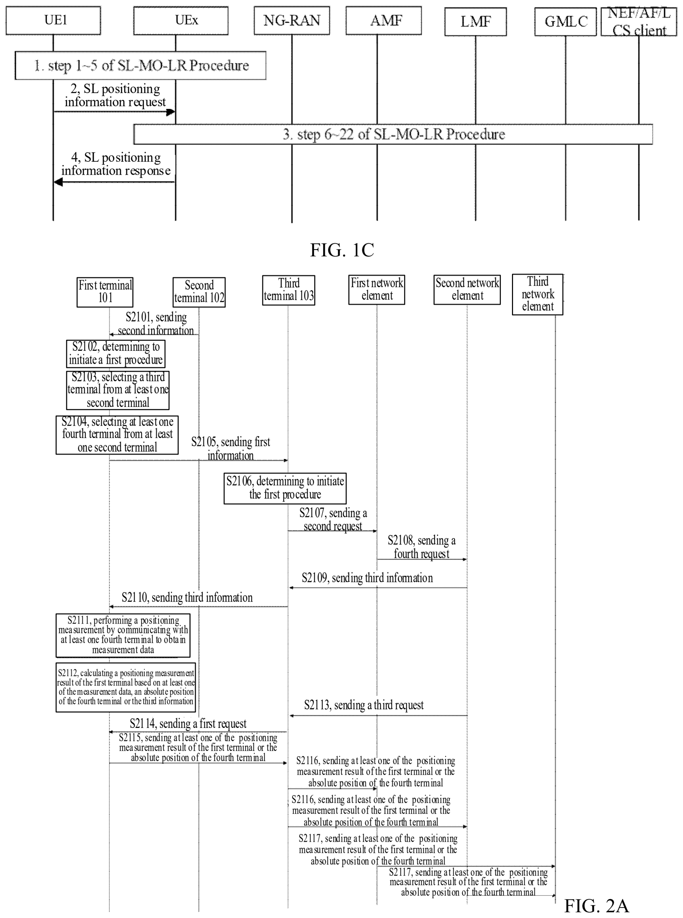

It can be seen from the above content that the target terminal to be positioned and measured (i.e., terminal 1 mentioned above) can request positioning assistance from the core network device (i.e., the AMF, the LMF mentioned above) to determine the positioning measurement result of the target terminal by executing the above steps 1 to 22. However, in the communication system, the target terminal may usually not be covered by the network signal or have no NAS connection, which causes the target terminal to be unable to communicate with the core network device. In this case, the target terminal needs to select terminal x from the located terminals (i.e., terminal 2-terminal n mentioned above), and instructs terminal x to replace terminal 1 to initiate SL-MO-LR, so as to achieve positioning measurement of terminal 1. Optionally, FIG. 1C is an interactive flowchart of a positioning method provided in an embodiment of the present disclosure. Optionally, the premise of the method shown in FIG. 1C is that the terminal to be positioned and measured cannot communicate with the core network device (such as the AMF). As shown in FIG. 1C, the positioning method may include the following steps.

Step1, terminal 1 executes the above steps 1-5 in FIG. 1B.

Step 2, terminal 1 selects terminal x from the located terminals (i.e., terminal 2-terminal n mentioned above), and sends an SL positioning information request to terminal x.

Optionally, the SL positioning information request may include at least one of the following:
an identifier of the LMF stored in terminal 1;
a QoS requirement; or
an identifier of terminal 1.

Step 3, terminal x executes the above steps 6-22 in FIG. 1B to obtain the positioning measurement result of terminal 1.

Step 4, terminal x sends an SL positioning information response including the positioning measurement result of terminal 1 to the target UE.

However, the method shown in FIG. 1C still has the following problems which have not been clarified.

First, how does terminal 1 currently select terminal x from terminal 2 to terminal n?

Second, what protocol is used for communication between terminal 1, terminal x, the AMF and the LMF?

Third, when terminal x obtains the positioning measurement result of terminal 1, terminal x usually needs to obtain the absolute positions of terminal 2 to terminal n. How does terminal x obtain the absolute positions of terminal 2 to terminal n?

FIG. 2A shows an interactive flowchart of a positioning method according to an embodiment of the present disclosure. As shown in FIG. 2A, an embodiment of the present disclosure relates to a positioning method performed by a communication system 100, and the method includes the following steps.

Step 2101, some or all of second terminals send second information to a first terminal, respectively.

Optionally, in some embodiments, the second terminal may be a terminal discovered by the first terminal. Optionally, in some embodiments, there may be at least one second terminal.

Optionally, in some embodiments, the first terminal may be a target terminal (Target UE) to be positioned and measured. Optionally, in some embodiments, the first terminal cannot communicate with a first network element and requires assistance of the first network element to complete a positioning procedure of the first terminal. Optionally, in some embodiments, the above-mentioned first network element may be used to perform registration, connection, reachability, and mobility management, provide a session management message transmission channel for the device, and provide authentication and authorization functions for terminal access. The first network element may be an access point for the terminal accessing a wireless core network control plane. The first network element may be an AMF, and the name of the first network element is not limited thereto.

Optionally, in some embodiments, the above-mentioned "requiring the assistance of the first network element to complete the positioning procedure of the first terminal" may include at least one of the following:
requiring the first network element to select a second network element, in which the second network element is used to send third information for assisting positioning;
requiring the first network element to select a second network element, in which the second network element is used to calculate a positioning measurement result of the first terminal; or
requiring the first network element to send the positioning measurement result of the first terminal to the third network element.

Optionally, the second network element may be used to manage links and resources between network elements for the user in the access network, and the second network element may be, for example, an LMF, and the name of the second network element is not limited thereto. Optionally, the third network element may be used to provide position-based services. The third network element may be, for example, any one of the following: an AF, an LCS client, a GMLC, or an NEF, and the name of the third network element is not limited thereto.

Optionally, in some embodiments, the second information may include at least one of the following:
a positioning capability of the second terminal;
a first indication indicating whether the second terminal is capable of communicating with the first network element;
a second indication indicating whether the second terminal knows an absolute position of the second terminal;
an absolute position of the second terminal; or
a network element identifier corresponding to the second network element.

Optionally, in some embodiments, the network element identifier included in the above-mentioned second information may be a network element identifier corresponding to the second network element with which the second terminal has communicated. Optionally, in some embodiments, the second network element may be used to manage links and resources between network elements for the user in the access network, and the second network element may be, for example, an LMF, and the name of the second network element is not limited thereto.

Step 2102, the first terminal determines to initiate a first procedure.

Optionally, the first procedure may be used to determine a positioning measurement result of the first terminal. Optionally, the first procedure may be SL-MO-LR, and the name of the first procedure is not limited thereto.

Optionally, in some embodiments, in response to the presence of a second terminal that can communicate with the first network element among the at least one second terminal, the first terminal determines to initiate the first procedure.

Step 2103, the first terminal selects a third terminal from the at least one second terminal.

Optionally, in some embodiments, the first terminal may select the third terminal from the at least one second terminal that has sent the second information.

Optionally, the third terminal can be used to replace the first terminal to initiate the first procedure to the first network element, so as to achieve positioning measurement of the first terminal. Optionally, it can be seen from the above content that the positioning procedure of the first terminal requires the assistance of the first network element, but because the first terminal cannot communicate with the first network element, the first terminal cannot initiate the first procedure to the first network element to determine the positioning measurement result of the first terminal. In this case, the first terminal needs to select the third terminal from the at least one second terminal, so that the third terminal can replace the first terminal to initiate the first procedure to the first network element to achieve positioning measurement of the first terminal.

Optionally, in some embodiments, the method for selecting the third terminal from the at least one second terminal may include at least one of the following:
selecting, from the at least one second terminal, a terminal capable of communicating with the first network element as a third terminal; or
determining a second terminal sending second information including a network element identifier the same as the network element identifier of the second network element stored in the first terminal as the third terminal.

For example, in some embodiments, the first terminal may select the terminal among the second terminals that can communicate with the first network element as the third terminal, or in some embodiments, the first terminal may determine the second terminal sending second information including a network element identifier the same as the network element identifier of the second network element stored in the first terminal as the third terminal, or in some embodiments, the first terminal may determine the second terminal among the second terminals that can communicate with the first network element and sends second information including a network element identifier the same as the network element identifier of the second network element stored in the first terminal as the third terminal; or in some embodiments, the first terminal may determine the second terminal among the second terminals that can communicate with the first network element and sends second information including a network element identifier the same as the network element identifier of the second network element stored in the first terminal as the third terminal.

Optionally, in some embodiments, the network element identifier of the second network element stored in the first terminal may be understood as, for example, the network element identifier of the second network element with which the first terminal has communicated.

Step 2104, the first terminal selects at least one fourth terminal from the at least one second terminal.

Optionally, in some embodiments, the fourth terminal may be a located UE, and the fourth terminal may meet at least one of the following conditions: the fourth terminal being capable of communicating with the first network element, or knowing an absolute position of the fourth terminal. Optionally, the above-mentioned "the fourth terminal being capable of communicating with the first network element" indicates that the fourth terminal can request the first network element for the absolute position of the fourth terminal. The above-mentioned "the fourth terminal knowing its own absolute position" indicates that the fourth terminal has stored its own absolute position. Optionally, when the fourth terminal meets the above-mentioned condition, it means that the fourth terminal can know its own absolute position, and in this case, the fourth terminal can be used as a located terminal to implement the positioning measurement of the first terminal. Optionally, the process of the fourth terminal implementing the positioning measurement of the first terminal may be described as follows: the first terminal and the fourth terminal can send positioning reference signals to each other, and the first terminal and the fourth terminal can respectively measure and analyze the received positioning reference signals to determine at least one of a relative position, a relative angle, or a relative distance between the first terminal and the fourth terminal, and then, in combination with the absolute position of the fourth terminal, the positioning measurement of the first terminal can be implemented.

Optionally, it should be noted that, in some embodiments, the third terminal selected by the first terminal may be included in the at least one fourth terminal, that is, the third terminal may be any fourth terminal, in which case the third terminal serves as both a located terminal and a terminal that replaces the first terminal to initiate the first procedure. In other embodiments, the third terminal selected by the first terminal may not be the fourth terminal, in which case the third terminal replaces the first terminal to initiate the first procedure, but does not serve as a located terminal.

Step 2105, the first terminal sends first information to the third terminal.

Optionally, the first information may be used to request the third terminal to initiate the first procedure to the first network element.

Optionally, the name of the first information is not limited, which may be, for example, "SL positioning information request", "positioning information request" or the like.

Optionally, the first information may include at least one of the following:
a first requirement, the first requirement including at least one of a category, an accuracy, or a response time of the first requirement;
a terminal identifier of the first terminal;
a terminal identifier of the fourth terminal;
a third indication, indicating whether the fourth terminal is capable of communicating with the first network element;
a fourth indication, indicating a calculation entity for calculating the positioning measurement result of the first terminal, in which the calculation entity includes any one of the first terminal, the third terminal, or the second network element;
a fifth indication, indicating third information for assisting positioning during the positioning procedure;
a sixth indication, indicating whether at least one of the positioning measurement result of the first terminal or the absolute position of the fourth terminal needs to be sent to the third network element;
a seventh indication, indicating a network element identifier of a third network element;
an eighth indication, w indicating a type of the positioning measurement result expected by the first terminal;
a positioning capability of the first terminal; or
a positioning capability of the fourth terminal.

Optionally, the above-mentioned first requirement can be a service quality requirement during the positioning measurement. The category of the above-mentioned first requirement is used to define a degree of strictness of the positioning service quality during the positioning measurement, and the degrees of strictness defined by different categories of the above-mentioned first requirements are different. The above-mentioned accuracy is used to indicate an accuracy requirement during the positioning measurement, and the above-mentioned response time is used to indicate a response requirement during the positioning measurement. Optionally, the first requirement may be, for example, the QoS requirement. Optionally, the above-mentioned "category of the above-mentioned first requirement" can include at least one of the following: Best Effort Class, Multiple QoS Class, or Assured Class; optionally, the degree of strictness of the positioning service quality defined by the category "Best Effort Class" is: the least strict; the degree of strictness of the positioning service quality defined by the category "Multiple QoS Class" is: moderately strict; the degree of strictness of the positioning service quality defined by the category "Assured Class" is: the most strict. Optionally, the above-mentioned "accuracy" can include horizontal accuracy and vertical accuracy during the positioning measurement. Optionally, the above-mentioned "response time" can include: no delay, low delay or delay tolerant.

Optionally, the terminal identifier of the first terminal may uniquely indicate the first terminal, and the terminal identifier of the fourth terminal may uniquely indicate the fourth terminal. Optionally, the terminal identifier may be, for example, at least one of an application layer ID or a GPSI.

Optionally, the above-mentioned "calculation entity for calculating the positioning measurement result of the first terminal" may be determined by any one of the first terminal, the third terminal, or the second network element. Optionally, it is generally determined by the second network element by default. However, it may also be determined by the first terminal or the third terminal. Optionally, when the first terminal determines the calculation entity for calculating the positioning measurement result of the first terminal, the third terminal and the second network element comply with the determination result of the first terminal. When the first terminal does not determine the calculation entity for the positioning measurement result of the first terminal, and the calculation entity for the positioning measurement result of the first terminal is determined by the third terminal, then the first terminal and the second network element comply with the determination result of the third terminal. Optionally, in some embodiments, when the first information includes the above-mentioned fourth indication, it means that the first terminal has determined the calculation entity for calculating the positioning measurement result of the first terminal. In this case, the third terminal and the second network element should comply with the determination result of the first terminal (that is, comply with the fourth indication). When the first information does not includes the above-mentioned fourth indication, it means that the first terminal has not determined the calculation entity for calculating the positioning measurement result of the first terminal. In this case, the calculation entity for calculating the positioning measurement result of the first terminal can be determined by the third terminal or the second network element.

Optionally, in some embodiments, the network element identifier indicated in the seventh indication may be a network element identifier of a third network element to which at least one of the positioning measurement result of the first terminal or the absolute position of the fourth terminal needs to be sent.

Optionally, in some embodiments, the type of the positioning measurement result may include at least one of the following: the absolute position of the first terminal, the relative position between the first terminal and the fourth terminal, the distance between the first terminal and the fourth terminal, or the relative direction between the first terminal and the fourth terminal.

Step 2106, the third terminal determines to initiate the first procedure.

Optionally, in some embodiments, when the third terminal receives the first information sent by the first terminal, the third terminal determines to initiate the first procedure.

Optionally, in some embodiments, the above step 2102 and step 2106 may be performed selectively. For example, only step 2102 may be performed, or only step 2106 may be performed. Optionally, in other embodiments, both the above step 2102 and step 2106 may be performed.

Optionally, in some embodiments, when the third terminal determines to initiate the first procedure, if the third terminal is in a CM-IDLE state, the first terminal may trigger a service request to establish a connection with the first network element.

Step 2107, the third terminal sends a second request to the first network element.

Optionally, in some embodiments, the second request may be used to initiate the first procedure to the first network element.

Optionally, the name of the second request is not limited, which may be, for example, "SL-MO-LR request", "positioning request", etc.

Optionally, in some embodiments, the second request may include at least one of the following:
a first requirement, the first requirement including at least one of a category, an accuracy, or a response time of the first requirement;
a terminal identifier of the first terminal;
a terminal identifier of the third terminal;
a terminal identifier of the fourth terminal;
a third indication, indicating whether the fourth terminal is capable of communicating with the first network element;
a fourth indication, indicating a calculation entity for calculating the positioning measurement result of the first terminal, in which the calculation entity includes any one of the first terminal, the third terminal, or the second network element;
a fifth indication, indicating third information for assisting positioning during the positioning procedure;
a sixth indication, indicating whether at least one of the positioning measurement result of the first terminal or the absolute position of the fourth terminal needs to be sent to a third network element;
a seventh indication, indicating a network element identifier of a third network element;
an eighth indication, indicating a type of the positioning measurement result expected by the first terminal;
a positioning capability of the first terminal;
a positioning capability of the fourth terminal;
a positioning capability of the third terminal; or
a network element identifier corresponding to the second network element with which the third terminal can communicate.

Optionally, in some embodiments, the fourth indication in the second request may be the fourth indication included in the first information received by the third terminal from the first terminal. In this case, it is considered that the calculation entity for calculating the positioning measurement result of the first terminal is determined by the first terminal. Alternatively, in some embodiments, the fourth indication may be determined by the second terminal when the first information sent by the first terminal does not include the fourth indication. In this case, it is considered that the first terminal does not determine the calculation entity for calculating the positioning measurement result of the first terminal, but the calculation entity for calculating the positioning measurement result of the first terminal is determined by the second terminal. Alternatively, in some other embodiments, the second request may not carry the fourth indication, and the first information may not carry the fourth indication. In this case, it is assumed that the calculation entity for calculating the positioning measurement result of the first terminal is determined by the second network element by default.

Optionally, in some embodiments, the third terminal sends a first message, the first message including the second request. Optionally, the first network element receives the first message, the first message may be, for example, a UL NAS TRANSPORT message, but is not limited thereto, and the first message may also be other uplink messages.

Step 2108, the first network element sends a fourth request to the second network element.

Optionally, the fourth request may be used to request to determine the positioning measurement result of the first terminal.

Optionally, the name of the fourth request is not limited, which may be, for example, "N1mf_Location_DetermineLocation request", "position request", etc.

Optionally, in some embodiments, the fourth request includes at least one of the following:
a first requirement, the first requirement including at least one of a category, an accuracy, or a response time of the first requirement;
a terminal identifier of the first terminal;
a terminal identifier of the third terminal;
a terminal identifier of the fourth terminal;
a third indication, indicating whether the fourth terminal is capable of communicating with the first network element;
a fourth indication, indicating a calculation entity for calculating the positioning measurement result of the first terminal, in which the calculation entity includes any one of the first terminal, the third terminal, or the second network element;
a fifth indication, indicating third information for assisting positioning during the positioning procedure;
a sixth indication, indicating whether at least one of the positioning measurement result of the first terminal or the absolute position of the fourth terminal needs to be sent to a third network element;
a seventh indication, indicating a network element identifier of a third network element;
an eighth indication, indicating a type of the positioning measurement result expected by the first terminal;
a positioning capability of the first terminal;
a positioning capability of the fourth terminal; or
a positioning capability of the third terminal.

Optionally, in some embodiments, the first network element may send a second message, the second message including the fourth request, and the second network element may receive the second message. Optionally, the second message may be, for example, a Nlmf Location_DetermineLocation request message, but is not limited thereto, and the second message may also be other messages for requesting a position.

Step 2109, the second network element sends third information for assisting positioning to the third terminal.

Step 2110, the third terminal sends the third information to the first terminal.

Step 2111, the first terminal communicates with at least one fourth terminal to perform the positioning measurement to obtain measurement data.

Optionally, in some embodiments, the method in which the first terminal communicates with at least one fourth terminal to perform the positioning measurement to obtain the measurement data may implemented as follows: the first terminal may send a positioning reference signal to the fourth terminal, and after the fourth terminal receives the positioning reference signal, the fourth terminal obtains the measurement data by measuring the positioning reference signal, and sends the measurement data to the first terminal; alternatively, the fourth terminal sends a positioning reference signal to the first terminal, and after the first terminal receives the positioning reference signals sent by the fourth terminal, the first terminal obtains the measurement data by measuring the positioning reference signal.

Step 2112, the first terminal calculates the positioning measurement result of the first terminal based on at least one of the measurement data, the absolute position of the fourth terminal, or the third information.

Step 2113, the second network element sends a third request to the third terminal.

Optionally, in some embodiments, the third request is used to request at least one of the positioning measurement result of the first terminal or the absolute position of the fourth terminal.

Optionally, in some embodiments, when at least one of the positioning measurement result of the first terminal or the absolute position of the fourth terminal needs to be sent to the third network element, the second terminal may send the third request to the third terminal.

Step 2114, the third terminal sends a first request to the first terminal.

Optionally, in some embodiments, the first request is used to request to send at least one of the positioning measurement result of the first terminal or the absolute position of the fourth terminal to the third network element.

Optionally, in some embodiments, when at least one of the positioning measurement result of the first terminal or the absolute position of the fourth terminal needs to be sent to the third network element, the third terminal may send the first request to the first terminal.

Step 2115, the first terminal sends at least one of the positioning measurement result of the first terminal or the absolute position of the fourth terminal to the third terminal.

Optionally, in some embodiments, the first terminal sends its positioning measurement result to the third terminal, so that the third terminal can subsequently send it to the third network element.

Optionally, it can be seen from the content of the aforementioned step 2105 that, the first information sent by the first terminal to the third terminal may indicate whether at least one of the positioning measurement result of the first terminal or the absolute position of the fourth terminal needs to be sent to the third network element. Based on this, the first terminal may know whether it is required to send at least one of the positioning measurement result of the first terminal or the absolute position of the fourth terminal to the third network element without need of the first request. Therefore, step 2114 may be an optional step, which may be executed or not.

Similarly, it can be seen from the content of the aforementioned step 2107 that, the second request sent by the third terminal to the first network element may also indicate whether at least one of the positioning measurement result of the first terminal or the absolute position of the fourth terminal needs to be sent to the third network element. Based on this, the third terminal may know whether it is required to send at least one of the positioning measurement result of the first terminal or the absolute position of the fourth terminal to the third network element without need of the third request. Therefore, step 2113 may be an optional step, which may be executed or not.

Step 2116, the third terminal sends at least one of the positioning measurement result of the first terminal or the absolute position of the fourth terminal to at least one of the first network element or the second network element.

Optionally, in some embodiments, when the positioning measurement result of the first terminal needs to be sent to the third network element, the third terminal may send the positioning measurement result to at least one of the first network element or the second network element after receiving the positioning measurement result sent by the first terminal, so that at least one of the first network element or the second network element can subsequently send the positioning measurement result of the first terminal to the third network element.

Step 2117, at least one of the first network element or the second network element sends at least one of the positioning measurement result of the first terminal or the absolute position of the fourth terminal to the third network element.

Optionally, in some embodiments, the third terminal may send at least one of the positioning measurement result or the absolute position of the fourth terminal to the second network element, and then the second network element directly sends at least one of the positioning measurement result or the absolute position of the fourth terminal to the third network element; alternatively, the second network element sends at least one of the positioning measurement result or the absolute position of the fourth terminal to the first network element, and then the first network element sends at least one of the positioning measurement result or the absolute position of the fourth terminal to the third network element. Optionally, the second network element may send a third message, which includes the positioning measurement result, and the first network element may receive the third message, which may be, for example, a Nlmf Location DetermineLocation response message, but is not limited thereto, and the third message may also be other messages for responding to the position request.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" can be used interchangeably.

**In** some embodiments, the terms such as "uplink", "uplink", "physical uplink" can be interchangeable, and terms such as "downlink", "downlink", "physical downlink" can be interchangeable, and the terms such as "side", "sidelink", "side communication", "sidelink communication", "direct connection", "direct link", "direct communication", "direct link communication" can be interchangeable.

In some embodiments, the terms "downlink control information (DCI)", "downlink (DL) assignment", "DL DCI", "uplink (UL) grant", "UL DCI" and the like may be used interchangeably.

In some embodiments, "obtain", "acquire", "get", "receive", "transmit", "bi-directionally transmit", "send and/or receive" can be interchangeable, and can be interpreted as receiving from other entities, obtaining from protocols, obtaining from high levels, obtaining by self-processing, autonomous implementation, etc.

In some embodiments, terms such as "send", "transmit", "report", "issue", "transmit", "bi-directionally transmit", "send and/or receive" can be used interchangeably.

The positioning method involved in the embodiments of the present disclosure may include at least one of steps S2101 to S2117. For example, step S2101 may be implemented as an independent embodiment, step S2102 may be implemented as an independent embodiment, steps S2101+S2102 may be implemented as an independent embodiment, and steps S2101+S2102+S2103 may be implemented as an independent embodiment, steps S2101+S2102+S2103+S2104 may be implemented as an independent embodiment, and steps S2101+S2102+S2103+S2104+S2105 may be implemented as an independent embodiment, which are not limited herein.

In some embodiments, steps S2115 to S2117 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 2B shows an interactive flowchart of a positioning method according to an embodiment of the present disclosure. As shown in FIG. 2B, an embodiment of the present disclosure relates to a positioning method performed by a communication system 100, and the method includes the following steps.

Step 2201, some or all of second terminals send second information to a first terminal, respectively.

Step 2202, the first terminal determines to initiate a first procedure.

Step 2203, the first terminal selects a third terminal from the at least one second terminal.

Step 2204, the first terminal selects at least one fourth terminal from the at least one second terminal.

Step 2205, the first terminal sends first information to the third terminal.

Step 2206, the third terminal determines to initiate the first procedure.

Step 2207, the third terminal sends a second request to the first network element.

Step 2208, the first network element sends a fourth request to the second network element.

Step 2209, the second network element sends third information for assisting positioning to the third terminal.

Step 2210, the second network element sends a third request to the third terminal.

Step 2211, the third terminal sends a first request to the first terminal.

Step 2212, the first terminal communicates with at least one fourth terminal to perform the positioning measurement to obtain measurement data.

Regarding the detailed descriptions of steps 2201-2212, reference may be made to the descriptions of steps 2101-2109 and 2112-2114 in FIG. 2A and the involved alternative implementations, which will not be repeated here.

Step 2213, the first terminal sends at least one of the measurement data or the absolute position of the fourth terminal to the third terminal.

Step 2214, the third terminal calculates the positioning measurement result of the first terminal based on at least one of the measurement data, the absolute position of the fourth terminal, or the third information.

Regarding the detailed descriptions of steps 2213-2214, reference may be made to the descriptions of steps 2115 and 2112 in FIG. 2A and the involved alternative implementations, which will not be repeated here.

Step 2215, the third terminal sends the positioning measurement result of the first terminal to the first terminal.

Optionally, the third terminal sends a fourth message, the fourth message including the positioning measurement result of the first terminal; the first terminal receives the fourth message. Optionally, the name of the fourth message is not limited, which can be, for example, "SL positioning information response", "positioning information response", etc.

Step 2216, the third terminal sends at least one of the positioning measurement result of the first terminal or the absolute position of the fourth terminal to at least one of the first network element or the second network element.

Optionally, in some embodiments, when the positioning measurement result of the first terminal needs to be sent to the third network element, the first terminal may send the positioning measurement result to the third terminal after calculating the positioning measurement result, so that the third terminal can subsequently send the positioning measurement result of the first terminal to the third network element.

Step 2217, at least one of the first network element or the second network element sends the positioning measurement result of the first terminal to the third network element.

The positioning method involved in the embodiments of the present disclosure may include at least one of steps S2201 to S2217. For example, step S2201 may be implemented as an independent embodiment, step S2202 may be implemented as an independent embodiment, steps S2201+S2202 may be implemented as an independent embodiment, and steps S2201+S2202+S2203 may be implemented as an independent embodiment, steps S2201+S2202+S2203+S2204 may be implemented as an independent embodiment, and steps S2201+S2202+S2203+S2204+S2205 may be implemented as an independent embodiment, which are not limited herein.

**In** some embodiments, steps S2216 to S2217 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

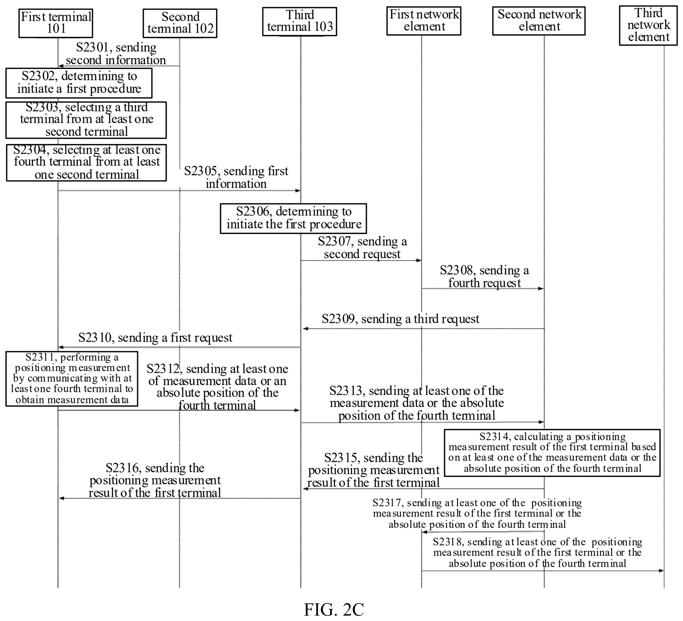

FIG. 2C shows an interactive flowchart of a positioning method according to an embodiment of the present disclosure. As shown in FIG. 2C, an embodiment of the present disclosure relates to a positioning method performed by a communication system 100, and the method includes the following steps.

Step 2301, some or all of second terminals send second information to a first terminal, respectively.

Step 2302, the first terminal determines to initiate a first procedure.

Step 2303, the first terminal selects a third terminal from the at least one second terminal.

Step 2304, the first terminal selects at least one fourth terminal from the at least one second terminal.

Step 2305, the first terminal sends first information to the third terminal.

Step 2306, the third terminal determines to initiate the first procedure.

Step 2307, the third terminal sends a second request to the first network element.

Step 2308, the first network element sends a fourth request to the second network element.

Step 2309, the second network element sends a third request to the third terminal.

Step 2310, the third terminal sends a first request to the first terminal.

Step 2311, the first terminal communicates with at least one fourth terminal to perform the positioning measurement to obtain measurement data.

Step 2312, the first terminal sends at least one of the measurement data or the absolute position of the fourth terminal to the third terminal.

Regarding the detailed descriptions of steps 2301-2312, reference may be made to the descriptions of steps 2101-2108, 2111 and 2113-2115 in FIG. 2A and the involved alternative implementations, which will not be repeated here.

Step 2313, the third terminal sends at least one of the measurement data or the absolute position of the fourth terminal to the second network element.

Step 2314, the second network element calculates the positioning measurement result of the first terminal based on at least one of the measurement data or the absolute position of the fourth terminal.

Regarding the detailed descriptions of steps 2313-2314, reference may be made to the descriptions of steps 2116 and 2112 in FIG. 2A and the involved alternative implementations, which will not be repeated here.

Step 2315, the second network element sends the positioning measurement result of the first terminal to the third terminal.

Optionally, in some embodiments, the third terminal may send a fifth message, the fifth message including the positioning measurement result of the first terminal, and he second network element may receive the fifth message. The fifth message may be, for example, a DL NAS TRANSPORT message, but is not limited thereto, and the fifth message may also be other downlink messages.

Step 2316, the third terminal sends the positioning measurement result of the first terminal to the first terminal.

Regarding the detailed descriptions of step 2316, reference may be made to the descriptions of steps 2215 in FIG. 2B and the involved alternative implementations, which will not be repeated here.

Step 2317, the second network element sends at least one of the positioning measurement result of the first terminal or the absolute position of the fourth terminal to the first network element.

Optionally, in some embodiments, when the positioning measurement result of the first terminal needs to be sent to the third network element, the second network element may send at least one of the positioning measurement result of the first terminal or the absolute position of the fourth terminal to the first terminal, so that the first terminal can subsequently send the positioning measurement result of the first terminal to the third network element.

Optionally, in some other embodiments, the second network element may also directly send at least one of the positioning measurement result or the absolute position of the fourth terminal to the third network element.

Step 2318, the first network element sends at least one of the positioning measurement result of the first terminal or the absolute position of the fourth terminal to the third network element.

Optionally, in some embodiments, after the first network element receives the positioning measurement result sent by the second network element, the first network element may send the positioning measurement result to the third terminal, so that the third terminal forwards the positioning measurement result to the first terminal. Optionally, the first network element sends a sixth message, the sixth message includes the positioning measurement result, and the third terminal receives the sixth message. The name of the sixth message is not limited, which may be, for example, "SL-MO-LR response", "positioning response", etc.

The positioning method involved in the embodiments of the present disclosure may include at least one of steps S2301 to S2318. For example, step S2301 may be implemented as an independent embodiment, step S2302 may be implemented as an independent embodiment, steps S2301+S2302 may be implemented as an independent embodiment, and steps S2301+S2302+S2303 may be implemented as an independent embodiment, steps S2301+S2302+S2303+S2304 may be implemented as an independent embodiment, and steps S2301+S2302+S2303+S2304+S2305 may be implemented as an independent embodiment, which are not limited herein.

In some embodiments, steps S2317 to S2318 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

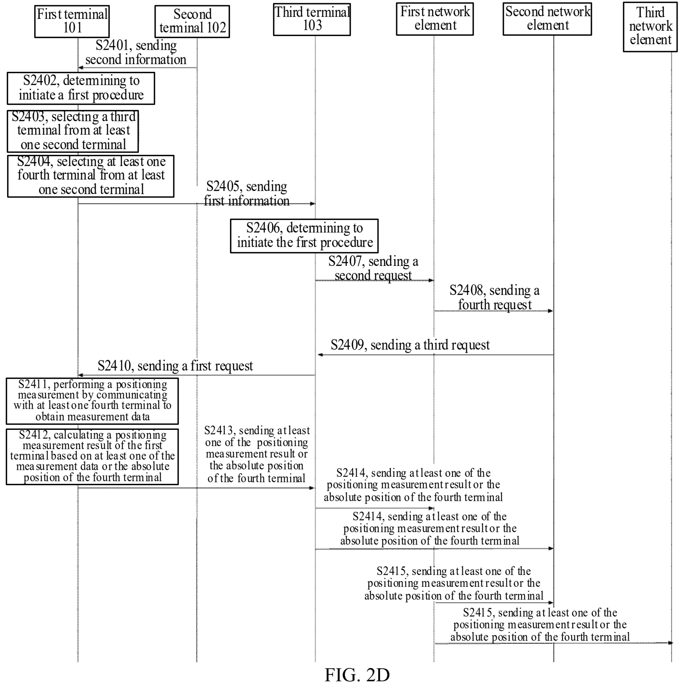

FIG. 2D shows an interactive flowchart of a positioning method according to an embodiment of the present disclosure. As shown in FIG. 2D, an embodiment of the present disclosure relates to a positioning method performed by a communication system 100, and the method includes the following steps.

Step 2401, some or all of second terminals send second information to a first terminal, respectively.

Step 2402, the first terminal determines to initiate a first procedure.

Step 2403, the first terminal selects a third terminal from the at least one second terminal.

Step 2404, the first terminal selects at least one fourth terminal from the at least one second terminal.

Step 2405, the first terminal sends first information to the third terminal.

Step 2406, the third terminal determines to initiate the first procedure.

Step 2407, the third terminal sends a second request to the first network element.

Step 2408, the first network element sends a fourth request to the second network element.

Step 2409, the second network element sends a third request to the third terminal.

Step 2410, the third terminal sends a first request to the first terminal.

Step 2411, the first terminal communicates with at least one fourth terminal to perform the positioning measurement to obtain measurement data.

Step 2412, the first terminal calculates the positioning measurement result of the first terminal based on at least one of the measurement data or the absolute position of the fourth terminal.

Step 2413, the first terminal sends at least one of the positioning measurement result of the first terminal or the absolute position of the fourth terminal to the third terminal.

Regarding the detailed descriptions of steps 2401-2413, reference may be made to the descriptions of steps 2101-2108 and 2111-2115 in FIG. 2A and the involved alternative implementations, which will not be repeated here.

Step 2414, the third terminal sends at least one of the positioning measurement result of the first terminal or the absolute position of the fourth terminal to at least one of the first network element or the second network element.

Step 2415, at least one of the first network element or the second network element sends at least one of the positioning measurement result of the first terminal or the absolute position of the fourth terminal to the third network element.

Regarding the detailed descriptions of steps 2414-2415, reference may be made to the descriptions of steps 2116 and 2117 in FIG. 2A and the involved alternative implementations, which will not be repeated here.

Optionally, in some embodiments, the third terminal may send at least one of the positioning measurement result or the absolute position of the fourth terminal to the second network element, and then the second network element directly sends at least one of the positioning measurement result or the absolute position of the fourth terminal to the third network element; or, the second network element may send at least one of the positioning measurement result or the absolute position of the fourth terminal to the first network element, and then the first network element may send at least one of the positioning measurement result or the absolute position of the fourth terminal to the third network element.

The positioning method involved in the embodiments of the present disclosure may include at least one of steps S2401 to S2415. For example, step S2401 may be implemented as an independent embodiment, step S2402 may be implemented as an independent embodiment, steps S2401+S2402 may be implemented as an independent embodiment, and steps S2401+S2402+S2403 may be implemented as an independent embodiment, steps S2401+S2402+S2403+S2404 may be implemented as an independent embodiment, and steps S2401+S2402+S2403+S2404+S2405 may be implemented as an independent embodiment, which are not limited herein.

In some embodiments, steps S2412 to S2415 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

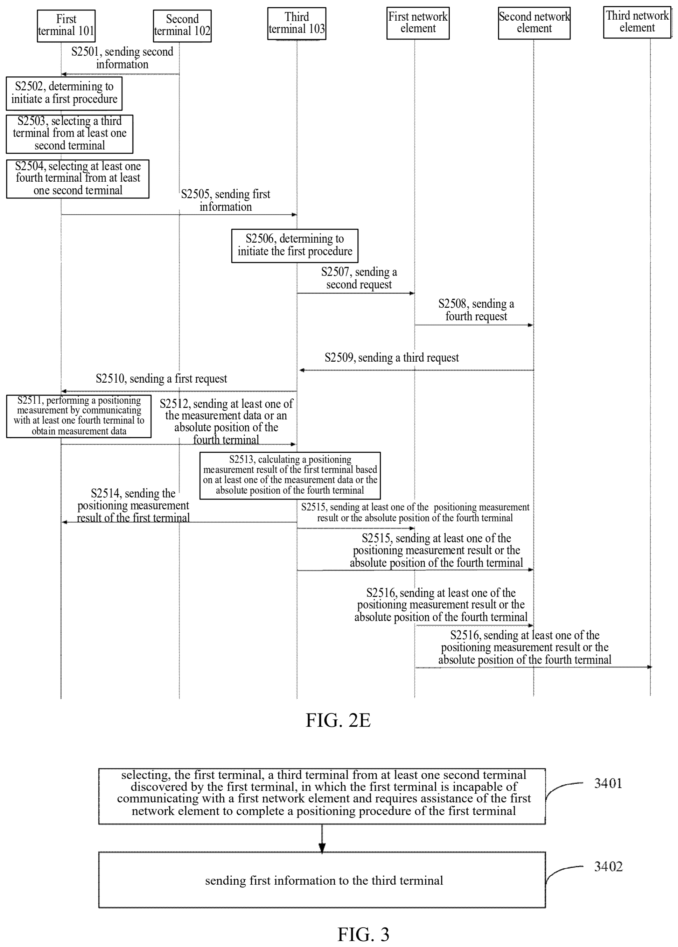

FIG. 2E shows an interactive flowchart of a positioning method according to an embodiment of the present disclosure. As shown in FIG. 2E, an embodiment of the present disclosure relates to a positioning method performed by a communication system 100, and the method includes the following steps.

Step 2501, some or all of second terminals send second information to a first terminal, respectively.

Step 2502, the first terminal determines to initiate a first procedure.

Step 2503, the first terminal selects a third terminal from the at least one second terminal.

Step 2504, the first terminal selects at least one fourth terminal from the at least one second terminal.

Step 2505, the first terminal sends first information to the third terminal.

Step 2506, the third terminal determines to initiate the first procedure.

Step 2507, the third terminal sends a second request to the first network element.

Step 2508, the first network element sends a fourth request to the second network element.

Step 2509, the second network element sends a third request to the third terminal.

Step 2510, the third terminal sends a first request to the first terminal.

Step 2511, the first terminal communicates with at least one fourth terminal to perform the positioning measurement to obtain measurement data.

Regarding the detailed descriptions of steps 2501-2411, reference may be made to the descriptions of steps 2101-2108, 2111 and 2113-2114 in FIG. 2A and the involved alternative implementations, which will not be repeated here.

Step 2512, the first terminal sends at least one of the measurement data or the absolute position of the fourth terminal to the third terminal.

Step 2513, the third terminal calculates the positioning measurement result of the first terminal based on at least one of the measurement data or the absolute position of the fourth terminal.

Step 2514, the third terminal sends the positioning measurement result of the first terminal to the first terminal.

Step 2515, the third terminal sends at least one of the positioning measurement result of the first terminal or the absolute position of the fourth terminal to at least one of the first network element or the second network element.

Step 2516, at least one of the first network element or the second network element sends at least one of the positioning measurement result of the first terminal or the absolute position of the fourth terminal to the third network element.

Optionally, in some embodiments, the third terminal may send at least one of the positioning measurement result or the absolute position of the fourth terminal to the second network element, and then the second network element directly sends at least one of the positioning measurement result or the absolute position of the fourth terminal to the third network element; or, the second network element may send at least one of the positioning measurement result or the absolute position of the fourth terminal to the first network element, and then the first network element may send at least one of the positioning measurement result or the absolute position of the fourth terminal to the third network element.

Regarding the detailed descriptions of steps 2512-2516, reference may be made to the descriptions of steps 2115 and 2112 in FIG. 2A, the descriptions of step 2215 in FIG. 2B, the descriptions of steps 2116 and 2117 in FIG. 2A, and the involved alternative implementations, which will not be repeated here.

The positioning method involved in the embodiments of the present disclosure may include at least one of steps S2501 to S2516. For example, step S2501 may be implemented as an independent embodiment, step S2502 may be implemented as an independent embodiment, steps S2501+S2502 may be implemented as an independent embodiment, and steps S2501+S2502+S2503 may be implemented as an independent embodiment, steps S2501+S2502+S2503+S2504 may be implemented as an independent embodiment, and steps S2501+S2502+S2503+S2504+S2505 may be implemented as an independent embodiment, which are not limited herein.

In some embodiments, steps S2515 to S2516 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

It should be noted that, in some embodiments, in the above-mentioned FIG. 2A to FIG. 2E, when the third terminal exchanges at least one of the first information, the measurement data, the absolute position of the fourth terminal, or the positioning measurement result with the first terminal, the exchanging may be based on the first protocol; when the third terminal exchanges at least one of the measurement data, the absolute position of the fourth terminal, or the positioning measurement result with the second network element, the exchanging may also be based on the first protocol. Optionally, in some embodiments, the first protocol includes at least one of the following:
an application layer protocol;
a ranging and sidelink positioning protocol (RSPP);
a PC5 control plane signaling (PC5-S) protocol; or
a PC5 user plane (PC5-U) protocol.

The positioning method involved in the first embodiment is performed by a first terminal 101. The method includes the following steps.

Step 3101, the first terminal receives second information sent by some or all of second terminals.

Step 3102, the first terminal determines to initiate a first procedure.

Step 3103, the first terminal selects a third terminal from the at least one second terminal.

Step 3104, the first terminal selects at least one fourth terminal from the at least one second terminal.

Step 3105, the first terminal sends first information to the third terminal.

Step 3106, the first terminal receives third information sent by the third terminal.

Step 3107, the first terminal communicates with at least one fourth terminal to perform the positioning measurement to obtain measurement data.

Step 3108, the first terminal calculates a positioning measurement result of the first terminal based on at least one of the measurement data, the absolute position of the fourth terminal, or the third information.

Step 3109, the first terminal receives a first request sent by the third terminal.

Step 3110, the first terminal sends at least one of the positioning measurement result of the first terminal or an absolute position of the fourth terminal to the third terminal.

Regarding the detailed descriptions of steps 3101-3110, reference may be made to the descriptions of the above embodiments and the involved alternative implementations.

The positioning method involved in the embodiments of the present disclosure may include at least one of steps S3101 to 3110. For example, step S3101 may be implemented as an independent embodiment, step S3102 may be implemented as an independent embodiment, steps S3101+S3102 may be implemented as an independent embodiment, and steps S3101+S3102+S3103 may be implemented as an independent embodiment, steps S3101+S3102+S3103+S3104 may be implemented as an independent embodiment, and steps S3101+S3102+S3103+S3104+S3105 may be implemented as an independent embodiment, which are not limited herein.

In some embodiments, steps S3109 to S3110 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the second embodiment is performed by a first terminal 101. The method includes the following steps.

Step 3201, the first terminal receives second information sent by some or all of second terminals.

Step 3202, the first terminal determines to initiate a first procedure.

Step 3203, the first terminal selects a third terminal from the at least one second terminal.

Step 3204, the first terminal selects at least one fourth terminal from the at least one second terminal.

Step 3205, the first terminal sends first information to the third terminal.

Step 3206, the first terminal receives a first request sent by the third terminal.

Step 3207, the first terminal communicates with at least one fourth terminal to perform the positioning measurement to obtain measurement data.

Step 3208, the first terminal sends the measurement data or the absolute position of the fourth terminal to the third terminal.

Step 3209, the first terminal receives the positioning measurement result of the first terminal sent by the third terminal.

Regarding the detailed descriptions of steps 3201-3209, reference may be made to the descriptions of the above embodiments and the involved alternative implementations.

The positioning method involved in the embodiments of the present disclosure may include at least one of steps S3201 to 3209. For example, step S3201 may be implemented as an independent embodiment, step S3202 may be implemented as an independent embodiment, steps S3201+S3202 may be implemented as an independent embodiment, and steps S3201+S3202+S3203 may be implemented as an independent embodiment, steps S3201+S3202+S3203+S3204 may be implemented as an independent embodiment, and steps S3201+S3202+S3203+S3204+S3205 may be implemented as an independent embodiment, which are not limited herein.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the third embodiment is performed by a first terminal 101. The method includes the following steps.

Step 3301, the first terminal receives second information sent by some or all of second terminals.

Step 3302, the first terminal determines to initiate a first procedure.

Step 3303, the first terminal selects a third terminal from the at least one second terminal.

Step 3304, the first terminal selects at least one fourth terminal from the at least one second terminal.

Step 3305, the first terminal sends first information to the third terminal.

Step 3306, the first terminal receives a first request sent by the third terminal.

Step 3307, the first terminal communicates with at least one fourth terminal to perform the positioning measurement to obtain measurement data.

Step 3308, the first terminal calculates the positioning measurement result of the first terminal based on at least one of the measurement data or the absolute position of the fourth terminal.

Step 3309, the first terminal sends the positioning measurement result of the first terminal or the absolute position of the fourth terminal to the third terminal.

Regarding the detailed descriptions of steps 3301-3309, reference may be made to the descriptions of the above embodiments and the involved alternative implementations.

The positioning method involved in the embodiments of the present disclosure may include at least one of steps S3301 to 3309. For example, step S3301 may be implemented as an independent embodiment, step S3302 may be implemented as an independent embodiment, steps S3301+S3302 may be implemented as an independent embodiment, and steps S3301+S3302+S3303 may be implemented as an independent embodiment, steps S3301+S3302+S3303+S3304 may be implemented as an independent embodiment, and steps S3301+S3302+S3303+S3304+S3305 may be implemented as an independent embodiment, which are not limited herein.

In some embodiments, steps S3306 to S3309 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 3 shows an interactive flowchart of a positioning method according to an embodiment of the present disclosure. As shown in FIG. 3, an embodiment of the present disclosure relates to a positioning method performed by a first terminal 101, and the method includes the following steps.

Step 3401, the first terminal is incapable of communicating with a first network element and requires assistance of the first network element to complete a positioning procedure of the first terminal, the first terminal selects a third terminal from at least one second terminal discovered by the first terminal.

Step 3402, first information is sent to the third terminal.

Alternatively, in some embodiments, the third terminal is capable of communicating with the first network element. The first information is used to request the third terminal to initiate a first procedure to the first network element, and the first procedure is used to determine a positioning measurement result of the first terminal.

In combination with some embodiments of the first aspect, in some embodiments, the method further includes:
receiving second information sent by all or part of the at least one second terminal, in which the second information includes at least one of:
a positioning capability of the second terminal;
a first indication indicating whether the second terminal is capable of communicating with the first network element;
a second indication indicating whether the second terminal knows an absolute position of the second terminal;
an absolute position of the second terminal; or
a network element identifier corresponding to a second network element.

Alternatively, in some embodiments, selecting the third terminal from the at least one second terminal discovered by the first terminal includes:
selecting a terminal among the at least one second terminal that is capable of communicating with the first network element as the third terminal; or
determining a second terminal among the at least one second terminal that is capable of communicating with the first network element and sends second information including a network element identifier the same as a network element identifier of a second network element stored in the first terminal as the third terminal.

Alternatively, in some embodiments, the method further includes at least one of:
selecting at least one fourth terminal from the at least one second terminal based on the second information, in which a fourth terminal is used to implement a positioning measurement for the first terminal, and the fourth terminal satisfies at least one of:
being capable of communicating with the first network element; or
knowing an absolute position of the fourth terminal.

Alternatively, in some embodiments, requiring the assistance of the first network element to complete the positioning procedure of the first terminal includes at least one of:
requiring the first network element to select a second network element, in which the second network element is used to send third information for assisting positioning;
requiring the first network element to select a second network element, in which the second network element is used to calculate the positioning measurement result of the first terminal; or
requiring the first network element to send the positioning measurement result of the first terminal to a third network element.

Alternatively, in some embodiments, the first information includes at least one of:
a first requirement, in which the first requirement includes at least one of: a category, an accuracy, or a response time of the first requirement;
a terminal identifier of the first terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal; or
a positioning capability of a fourth terminal.

Alternatively, in some embodiments, the first requirement is a service quality requirement during a positioning measurement, the category of the first requirement indicates a degree of strictness of the service quality requirement during the positioning measurement, the accuracy indicates an accuracy requirement during the positioning measurement, and the response time indicates a response requirement during the positioning measurement.

Alternatively, in some embodiments, the method further includes:
obtaining measurement data by communicating with at least one fourth terminal to perform the positioning measurement.

Alternatively, in some embodiments, the method further includes:
calculating the positioning measurement result of the first terminal based on at least one of the measurement data or the absolute position of the fourth terminal, in which the calculation entity for calculating the positioning measurement result of the first terminal is the first terminal.

Alternatively, in some embodiments, the method further includes:
receiving third information for assisting positioning sent by the third terminal, in which the calculation entity for calculating the positioning measurement result of the first terminal is the first terminal; and
calculating the positioning measurement result of the first terminal based on at least one of the measurement data, the third information or the absolute position of the fourth terminal.

Alternatively, in some embodiments, the method further includes:
sending the positioning measurement result of the first terminal to the third terminal, in which the positioning measurement result of the first terminal needs to be sent to a third network element.

Alternatively, in some embodiments, the method further includes:
sending at least one of the measurement data or the absolute position of the fourth terminal to the third terminal, in which the calculation entity for calculating the positioning measurement result of the first terminal is not the first terminal; and
receiving the positioning measurement result of the first terminal sent by the third terminal.

Alternatively, in some embodiments, the method further includes:
receiving a first request sent by the third terminal, in which the first request is used to request at least one of the positioning measurement result of the first terminal, the measurement data, or the absolute position of the fourth terminal.

Alternatively, in some embodiments, the method further includes:
exchanging, by the first terminal, at least one of the first information, measurement data, an absolute position of a fourth terminal, or the positioning measurement result with the third terminal based on a first protocol.

Alternatively, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

Regarding the detailed descriptions of steps 3401-3402, reference may be made to the above FIG. 2A-FIG. 2E, the descriptions of the above first to third embodiments and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the fourth embodiment is performed by a third terminal 103. The method includes the following steps.

Step 4101, the third terminal receives first information sent by a first terminal.

Step 4102, the third terminal determines to initiate a first procedure.

Step 4103, the third terminal sends a second request to a first network element.

Step 4104, the third terminal receives third information for assisting positioning sent by a second network element.

Step 4105, the third terminal sends the third information to the first terminal.

Step 4106, the third terminal receives a third request sent by the second network element.

Step 4107, the third terminal sends a first request to the first terminal.

Step 4108, the third terminal receives at least one of a positioning measurement result of the first terminal or an absolute position of a fourth terminal sent by the first terminal.

Step 4109, the third terminal sends at least one of the positioning measurement result of the first terminal or an absolute position of the fourth terminal to at least one of the first network element or the second network element.

Regarding the detailed descriptions of steps 4101-4109, reference may be made to the descriptions of the above embodiments and the involved alternative implementations.

The positioning method involved in the embodiments of the present disclosure may include at least one of steps 4101 to 4109. For example, step 4101 may be implemented as an independent embodiment, step 4102 may be implemented as an independent embodiment, steps 4101+S4102 may be implemented as an independent embodiment, and steps 4101+S4102+S4103 may be implemented as an independent embodiment, steps 4101+S4102+S4103+S4104 may be implemented as an independent embodiment, and steps 4101+S4102+S4103+S4104+S4105 may be implemented as an independent embodiment, which are not limited herein.

In some embodiments, steps 4108 to 4109 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the fifth embodiment is performed by a third terminal 103. The method includes the following steps.

Step 4201, the third terminal receives first information sent by a first terminal.

Step 4202, the third terminal determines to initiate a first procedure.

Step 4203, the third terminal sends a second request to a first network element.

Step 4204, the third terminal receives third information for assisting positioning sent by a second network element.

Step 4205, the third terminal receives a third request sent by the second network element.

Step 4206, the third terminal sends a first request to the first terminal.

Step 4207, the third terminal receives at least one of measurement data or an absolute position of a fourth terminal sent by the first terminal.

Step 4208, the third terminal calculates a positioning measurement result of the first terminal based on at least one of the measurement data, an absolute position of a fourth terminal, or third information.

Step 4209, the third terminal sends the positioning measurement result of the first terminal to the first terminal.

Step 4210, the third terminal sends at least one of the positioning measurement result of the first terminal or the absolute position of the fourth terminal to at least one of the first network element or the second network element.

Regarding the detailed descriptions of steps 4101-4110, reference may be made to the descriptions of the above embodiments and the involved alternative implementations.

The positioning method involved in the embodiments of the present disclosure may include at least one of steps 4201 to 4210. For example, step 4201 may be implemented as an independent embodiment, step 4202 may be implemented as an independent embodiment, steps 4201+S4202 may be implemented as an independent embodiment, and steps 4201+S4202+S4203 may be implemented as an independent embodiment, steps 4201+S4202+S4203+S4204 may be implemented as an independent embodiment, and steps 4201+S4202+S4203+S4204+S4205 may be implemented as an independent embodiment, which are not limited herein.

In some embodiments, step 4210 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the sixth embodiment is performed by a third terminal 103. The method includes the following steps.

Step 4301, the third terminal receives first information sent by a first terminal.

Step 4302, the third terminal determines to initiate a first procedure.

Step 4303, the third terminal sends a second request to a first network element.

Step 4304, the third terminal receives a third request sent by a second network element.

Step 4305, the third terminal sends a first request to the first terminal.

Step 4306, the third terminal receives at least one of measurement data or an absolute position of a fourth terminal sent by the first terminal.

Step 4307, the third terminal sends at least one of the measurement data or the absolute position of the fourth terminal to the second network element.

Step 4308, the third terminal receives a positioning measurement result of the first terminal sent by the second network element.

Step 4309, the third terminal sends the positioning measurement result of the first terminal to the first terminal.

Regarding the detailed descriptions of steps 4301-4309, reference may be made to the descriptions of the above embodiments and the involved alternative implementations.

The positioning method involved in the embodiments of the present disclosure may include at least one of steps 4301 to 4309. For example, step 4301 may be implemented as an independent embodiment, step 4302 may be implemented as an independent embodiment, steps 4301+S4302 may be implemented as an independent embodiment, and steps 4301+S4302+S4303 may be implemented as an independent embodiment, steps 4301+S4302+S4303+S4304 may be implemented as an independent embodiment, and steps 4301+S4302+S4303+S4304+S4305 may be implemented as an independent embodiment, which are not limited herein.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the seventh embodiment is performed by a third terminal 103. The method includes the following steps.

Step 4401, the third terminal receives first information sent by a first terminal.

Step 4402, the third terminal determines to initiate a first procedure.

Step 4403, the third terminal sends a second request to a first network element.

Step 4404, the third terminal receives a third request sent by a second network element.

Step 4405, the third terminal sends a first request to the first terminal.

Step 4406, the third terminal receives at least one of a positioning measurement result of the first terminal or an absolute position of a fourth terminal sent by the first terminal.

Step 4407, the third terminal sends at least one of the positioning measurement result of the first terminal or the absolute position of the fourth terminal to at least one of the first network element or the second network element.

Regarding the detailed descriptions of steps 4401-4407, reference may be made to the descriptions of the above embodiments and the involved alternative implementations.

The positioning method involved in the embodiments of the present disclosure may include at least one of steps 4401 to 4407. For example, step 4401 may be implemented as an independent embodiment, step 4402 may be implemented as an independent embodiment, steps 4401+S4402 may be implemented as an independent embodiment, and steps 4401+S4402+S4403 may be implemented as an independent embodiment, steps 4401+S4402+S4403+S4404 may be implemented as an independent embodiment, and steps 4401+S4402+S4403+S4404+S4405 may be implemented as an independent embodiment, which are not limited herein.

In some embodiments, step 4407 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the eighth embodiment is performed by a third terminal 103. The method includes the following steps.

Step 4501, the third terminal receives first information sent by a first terminal.

Step 4502, the third terminal determines to initiate a first procedure.

Step 4503, the third terminal sends a second request to a first network element.

Step 4504, the third terminal receives a third request sent by a second network element.

Step 4505, the third terminal sends a first request to the first terminal.

Step 4506, the third terminal receives at least one of measurement data or an absolute position of a fourth terminal sent by the first terminal.

Step 4507, the third terminal calculates a positioning measurement result of the first terminal based on at least one of the measurement data or the absolute position of the fourth terminal.

Step 4508, the third terminal sends the positioning measurement result of the first terminal to the first terminal.

Step 4509, the third terminal sends at least one of the positioning measurement result of the first terminal or the absolute position of the fourth terminal to at least one of the first network element or the second network element.

Regarding the detailed descriptions of steps 4501-4509, reference may be made to the descriptions of the above embodiments and the involved alternative implementations.

The positioning method involved in the embodiments of the present disclosure may include at least one of steps 4501 to 4509. For example, step 4501 may be implemented as an independent embodiment, step 4502 may be implemented as an independent embodiment, steps 4501+S4502 may be implemented as an independent embodiment, and steps 4501+S4502+S4503 may be implemented as an independent embodiment, steps 4501+S4502+S4503+S4504 may be implemented as an independent embodiment, and steps 4501+S4502+S4503+S4504+S4505 may be implemented as an independent embodiment, which are not limited herein.

In some embodiments, step 4509 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

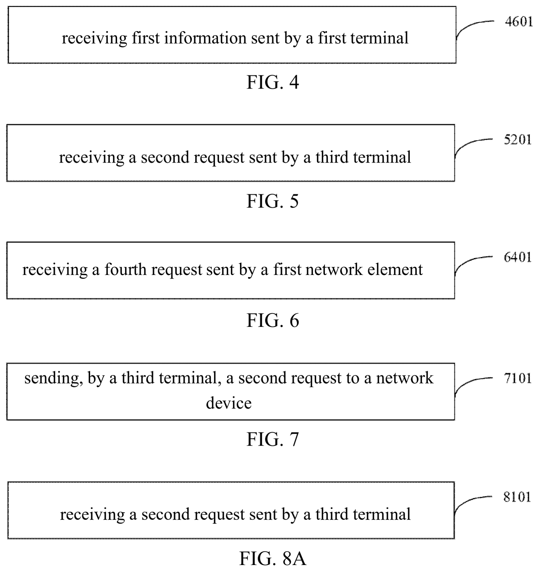

FIG. 4 shows an interactive flowchart of a positioning method according to an embodiment of the present disclosure. As shown in FIG. 4, an embodiment of the present disclosure relates to a positioning method performed by a third terminal 103, and the method includes the following steps.

Step 4601, first information sent by a first terminal is received.

Alternatively, in some embodiments, the first terminal is a terminal to be positioned, the first terminal is incapable of communicating with a first network element and requires assistance of the first network element to complete a positioning procedure of the first terminal. The first information is used to request the third terminal to initiate a first procedure to the first network element, and the first procedure is used to determine a positioning measurement result of the first terminal.

Alternatively, in some embodiments, the third terminal is selected by the terminal from at least one second terminal discovered by the first terminal;
the third terminal is a terminal among the at least one second terminal that is capable of communicating with the first network element; or
the third terminal is a terminal among the at least one second terminal that is capable of communicating with the first network element and sends second information including a network element identifier the same as a network element identifier of a second network element stored in the first terminal.

Alternatively, in some embodiments, the first information includes at least one of:
a first requirement, in which the first requirement includes at least one of: a category, an accuracy, or a response time of the first requirement;
a terminal identifier of the first terminal;
a terminal identifier of a fourth terminal, in which the fourth terminal is used to perform a positioning measurement for the first terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal; or
a positioning capability of a fourth terminal.

Alternatively, in some embodiments, the method further includes at least one of:
determining, by the third terminal, to initiate the first procedure; or
sending, by the third terminal, a second request to the first network element, in which the second request is used to initiate the first procedure to the first network element.

Alternatively, in some embodiments, the second request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal;
a positioning capability of the third terminal; or
a network element identifier corresponding to a second network element with which the third terminal is capable of communicating.

Alternatively, in some embodiments, the method further includes:
receiving third information for assisting positioning sent by the second network element.

Alternatively, in some embodiments, the method further includes:
sending the third information to the first terminal, in which the calculation entity for calculating the positioning measurement result of the first terminal is the first terminal.

Alternatively, in some embodiments, the method further includes:
receiving the positioning measurement result of the first terminal sent by the first terminal, in which the positioning measurement result of the first terminal needs to be sent to a third network element; and
sending the positioning measurement result of the first terminal to the second network element.

Alternatively, in some embodiments, the method further includes:
receiving at least one of measurement data or an absolute position of a fourth terminal sent by the first terminal, in which the calculation entity for calculating the positioning measurement result of the first terminal is the third terminal;
calculating the positioning measurement result of the first terminal based on at least one of the measurement data, third information or the absolute position of the fourth terminal; and
sending the positioning measurement result of the first terminal to the first terminal.

Alternatively, in some embodiments, the method further includes:
sending the positioning measurement result of the first terminal to the second network element, in which the positioning measurement result of the first terminal needs to be sent to a third network element.

Alternatively, in some embodiments, the method further includes:
receiving at least one of measurement data or an absolute position of a fourth terminal sent by the first terminal, in which the calculation entity for calculating the positioning measurement result of the first terminal is the second network element;
sending the at least one of the measurement data or the absolute position of the fourth terminal to the second network element;
receiving the positioning measurement result of the first terminal sent by at least one of the second network element or the first network element; and
sending the positioning measurement result of the first terminal to the first terminal.

Alternatively, in some embodiments, the method further includes at least one of:
receiving a third request sent by the second network element, in which the third request is used to request at least one of the positioning measurement result of the first terminal, measurement data, or an absolute position of a fourth terminal; or
sending a first request to the first terminal, in which the first request is used to request at least one of the positioning measurement result of the first terminal, measurement data, or an absolute position of a fourth terminal.

Alternatively, in some embodiments, the method further includes at least one of:
exchanging, by the third terminal, at least one of the first information, measurement data, an absolute position of a fourth terminal, or the positioning measurement result with the first terminal based on a first protocol; or
exchanging, by the third terminal, at least one of measurement data, an absolute position of a fourth terminal, or the positioning measurement result with a second network element based on a first protocol.

Alternatively, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

Regarding the detailed description of step 4601, reference may be made to the above FIG. 2A-FIG. 2E, the descriptions of the above fourth to eighth embodiments and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the ninth embodiment is performed by a first network element 1051. The method includes the following steps.

Step 5101, first information sent by a first terminal is received.

Optionally, in some embodiments, the first terminal is a terminal to be positioned, the first terminal cannot communicate with the first network element and requires assistance of the first network element to complete a positioning procedure of the first terminal, and the first information is used to request a third terminal to initiate a first procedure to the first network element, and the first procedure is used to determine a positioning measurement result of the first terminal.

Step 5102, the first network element sends a fourth request to a second network element.

Step 5103, the first network element receives at least one of a positioning measurement result of the first terminal or an absolute position of a fourth terminal sent by at least one of the third terminal or the second network element.

Optionally, in some embodiments, when the first network element only receives at least one of the positioning measurement result of the first terminal or the absolute position of the fourth terminal sent by the second network element, the first network element may also send the positioning measurement result to the third terminal.

Step 5104, the first network element sends at least one of the positioning measurement result of the first terminal or the absolute position of the fourth terminal to a third network element.

Regarding the detailed descriptions of steps 5101-5104, reference may be made to the descriptions of the above embodiments and the involved alternative implementations.

The positioning method involved in the embodiments of the present disclosure may include at least one of steps 5101 to 5104. For example, step 5101 may be implemented as an independent embodiment, step 5102 may be implemented as an independent embodiment, steps 5101+S5102 may be implemented as an independent embodiment, and steps 5101+S5102+S5103 may be implemented as an independent embodiment, and steps 5101+S5102+S5103+S5104 may be implemented as an independent embodiment, which are not limited herein.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 5 shows an interactive flowchart of a positioning method according to an embodiment of the present disclosure. As shown in FIG. 5, an embodiment of the present disclosure relates to a positioning method performed by a first network element 1051, and the method includes the following steps.

Step 5201, a second request sent by a third terminal is received.

Optionally, in some embodiments, the second request is used to initiate a first procedure to a first network element, the first procedure is used to determine a positioning measurement result of the first terminal, and the first terminal cannot communicate with the first network element.

Alternatively, in some embodiments, the second request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal;
a positioning capability of the third terminal; or
a network element identifier corresponding to a second network element with which the third terminal is capable of communicating.

Alternatively, in some embodiments, the method further includes:
sending a fourth request to a second network element, in which the fourth request is used to request the positioning measurement result of the first terminal.

Alternatively, in some embodiments, sending the fourth request to the second network element includes:
sending the fourth request to the second network element with which the third terminal is capable of communicating.

Alternatively, in some embodiments, the fourth request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal; or
a positioning capability of the third terminal.

Alternatively, in some embodiments, the method further includes at least one of:
receiving the positioning measurement result of the first terminal sent by a second network element;
sending the positioning measurement result of the first terminal to the third terminal; or
sending the positioning measurement result of the first terminal to the third network element, in which the positioning measurement result of the first terminal needs to be sent to a third network element.

Regarding the detailed description of step 5201, reference may be made to the above FIG. 2A-FIG. 2E, the descriptions of the above ninth embodiment and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the tenth embodiment is performed by a second network element 1022. The method includes the following steps.

Step 6101, the second network element receives a fourth request sent by a first network element.

Step 6102, the second network element sends third information for assisting positioning to a third terminal.

Step 6103, the second network element sends a third request to the third terminal.

Step 6104, the second network element receives at least one of a positioning measurement result of the first terminal or an absolute position of a fourth terminal sent by a third terminal.

Step 6105, the second network element sends at least one of the positioning measurement result of the first terminal or the absolute position of the fourth terminal to at least one of the first network element or a third network element.

Regarding the detailed descriptions of steps 6101-6105, reference may be made to the descriptions of the above embodiments and the involved alternative implementations.

The positioning method involved in the embodiments of the present disclosure may include at least one of steps 6101 to 6105. For example, step 6101 may be implemented as an independent embodiment, step 6102 may be implemented as an independent embodiment, steps 6101+S6102 may be implemented as an independent embodiment, and steps 6101+S6102+S6103 may be implemented as an independent embodiment, steps 6101+S6102+S6103+S6104 may be implemented as an independent embodiment, and steps 6101+S6102+S6103+S6104+S6105 may be implemented as an independent embodiment, which are not limited herein.

In some embodiments, steps 6103-6105 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the eleventh embodiment is performed by a second network element 1022. The method includes the following steps.

Step 6201, the second network element receives a fourth request sent by a first network element.

Step 6202, the second network element sends a third request to a third terminal.

Step 6203, the second network element receives at least one of measurement data or an absolute position of a fourth terminal sent by the third terminal.

Step 6204, the second network element calculates a positioning measurement result of the first terminal based on at least one of the measurement data or the absolute position of the fourth terminal.

Optionally, in some embodiments, the second network element may also autonomously determine third information for assisting positioning, and calculate the positioning measurement result of the first terminal based on at least one of the measurement data, the third information, or the absolute position of the fourth terminal.

Step 6205, the second network element sends the positioning measurement result of the first terminal to the third terminal.

Step 6206, the second network element sends at least one of the positioning measurement result of the first terminal or the absolute position of the fourth terminal to at least one of the first network element or a third network element.

Regarding the detailed descriptions of steps 6201-6206, reference may be made to the descriptions of the above embodiments and the involved alternative implementations.

The positioning method involved in the embodiments of the present disclosure may include at least one of steps 6201 to 6206. For example, step 6201 may be implemented as an independent embodiment, step 6202 may be implemented as an independent embodiment, steps 6201+S6202 may be implemented as an independent embodiment, and steps 6201+S6202+S6203 may be implemented as an independent embodiment, steps 6201+S6202+S6203+S6204 may be implemented as an independent embodiment, and steps 6201+S6202+S6203+S6204+S6205 may be implemented as an independent embodiment, which are not limited herein.

In some embodiments, steps 6202 and 6206 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

The positioning method involved in the twelfth embodiment is performed by a second network element 1022. The method includes the following steps.

Step 6301, the second network element receives a fourth request sent by a first network element.

Step 6302, the second network element sends a third request to a third terminal.

Step 6303, the second network element receives at least one of a positioning measurement result of the first terminal or an absolute position of a fourth terminal sent by the third terminal.

Step 6304, the second network element sends one or more of the positioning measurement result of the first terminal or the absolute position of the fourth terminal to at least one of the first network element or a third network element.

Regarding the detailed descriptions of steps 6301-6304, reference may be made to the descriptions of the above embodiments and the involved alternative implementations.

The positioning method involved in the embodiments of the present disclosure may include at least one of steps 6301 to 6304. For example, step 6301 may be implemented as an independent embodiment, step 6302 may be implemented as an independent embodiment, steps 6301+S6402 may be implemented as an independent embodiment, and steps 6301+S6402+S6403 may be implemented as an independent embodiment, and steps 6301+S6402+S6403+S6404 may be implemented as an independent embodiment, which are not limited herein.

In some embodiments, steps 6302-6304 may be optional, and one or more of these steps may be omitted or replaced in different embodiments.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 6 shows an interactive flowchart of a positioning method according to an embodiment of the present disclosure. As shown in FIG. 6, an embodiment of the present disclosure relates to a positioning method performed by a second network element 1022, and the method includes the following steps.

Step 6401, a fourth request sent by a first network element is received.

Alternatively, in some embodiments, the fourth request is used to request to determine a positioning measurement result of the first terminal, the first terminal is incapable of communicating with a first network element.

Alternatively, in some embodiments, the fourth request includes at least one of:
a first requirement, in which the first requirement includes at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, in which the calculation entity includes any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal; or
a positioning capability of the third terminal.

Alternatively, in some embodiments, the method further includes:
sending third information for assisting positioning a third terminal.

Alternatively, in some embodiments, the method further includes:
sending a third request to a third terminal, in which the calculation entity for calculating the positioning measurement result of the first terminal is the first terminal or the third terminal, the positioning measurement result of the first terminal needs to be sent to a third network element, and the third request is used to request the positioning measurement result of the first terminal;
receiving the positioning measurement result of the first terminal sent by the third terminal; and
sending the positioning measurement result of the first terminal to the first network element.

Alternatively, in some embodiments, the method further includes:
sending a third request to a third terminal, in which the calculation entity for calculating the positioning measurement result of the first terminal is a second network element, and the third request is used to request at least one of measurement data or an absolute position of a fourth terminal;
receiving the at least one of the measurement data or the absolute position of the fourth terminal sent by the third terminal;
calculating the positioning measurement result of the first terminal based on at least one of the measurement data, third information or the absolute position of the fourth terminal; and
sending the positioning measurement result of the first terminal to the third terminal.

Alternatively, in some embodiments, the method further includes:
sending the positioning measurement result of the first terminal to the first network element, in which the positioning measurement result of the first terminal needs to be sent to a third network element.

Alternatively, in some embodiments, the method further includes:
exchanging, by the second network element, at least one of measurement data, an absolute position of a fourth terminal, or the positioning measurement result with the third terminal based on a first protocol.

Alternatively, in some embodiments, the first protocol includes at least one of:
an application layer protocol;
a ranging and sidelink positioning protocol (RSPP);
a PC5 control plane signaling (PC5-S) protocol; or
a PC5 user plane (PC5-U) protocol.

Regarding the detailed description of step 6401, reference may be made to the above FIG. 2A-FIG. 2E, the descriptions of the above tenth to twelfth embodiments and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 7 shows a flowchart of a positioning method according to an embodiment of the present disclosure. As shown in FIG. 7, an embodiment of the present disclosure relates to a positioning method performed by a communication system, and the method includes the following steps.

Step 7101, a third terminal sends a second request to a network device.

Alternatively, the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

Alternatively, the method further includes:
sending, by the network device, third information for assisting positioning to the third terminal.

Alternatively, the method further includes:
determining, by the third terminal, at least one of the positioning measurement result of the first terminal or an absolute position of a fourth terminal; and
sending, by the third terminal, the at least one of the positioning measurement result of the first terminal or the absolute position of the fourth terminal to the network device.

Alternatively, the method further includes:
determining at least one of measurement data or an absolute position of a fourth terminal;
sending the at least one of the measurement data or the absolute position of the fourth terminal to the network device; and
   receiving the positioning measurement result of the first terminal sent by the network device.

Alternatively, the method further includes at least one of:
receiving a third request sent by the network device, in which the third request is used to request at least one of the positioning measurement result of the first terminal, the measurement data, or the absolute position of the fourth terminal.

Alternatively, the method further includes at least one of:
exchanging, by the third terminal, at least one of measurement data, an absolute position of a fourth terminal, or the positioning measurement result with the network device based on a first protocol.

Alternatively, the first protocol includes at least one of:
an application layer protocol;
a ranging and sidelink positioning protocol (RSPP);
a PC5 control plane signaling (PC5-S) protocol; or
a PC5 user plane (PC5-U) protocol.

Regarding the detailed description of step 7101, reference may be made to the embodiments corresponding to the first terminal side, the third terminal side, the first network element side, and the second network element side, and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

FIG. 8A shows a flowchart of a positioning method according to an embodiment of the present disclosure. As shown in FIG. 8A, an embodiment of the present disclosure relates to a positioning method performed by a core network device, and the method includes the following steps.

Step 8101, a second request sent by a third terminal is received.

Alternatively, the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

Alternatively, the method further includes:
sending third information for assisting positioning to the third terminal.

Alternatively, the method further includes:
sending a third request to the third terminal, in which the third request is used to request the positioning measurement result of the first terminal; and
receiving the positioning measurement result of the first terminal sent by the third terminal.

Alternatively, the method further includes:
sending a third request to the third terminal, in which the third request is used to request at least one of measurement data or an absolute position of a fourth terminal;
receiving the at least one of the measurement data or the absolute position of the fourth terminal sent by the third terminal; and
calculating the positioning measurement result of the first terminal based on at least one of the measurement data, the absolute position of the fourth terminal, or third information.

Alternatively, the method further includes:
exchanging, by the core network device, at least one of measurement data, an absolute position of a fourth terminal, or the positioning measurement result with the third terminal based on a first protocol.

Alternatively, the first protocol includes at least one of:
an application layer protocol;
a ranging and sidelink positioning protocol (RSPP);
a PC5 control plane signaling (PC5-S) protocol; or
a PC5 user plane (PC5-U) protocol.

Regarding the detailed description of step 8101, reference may be made to the embodiments corresponding to the first terminal side, the third terminal side, the first network element side, and the second network element side, and the involved alternative implementations.

In implementations or embodiments, unless there is any contradiction, each step can be independent, arbitrarily combined or exchanged in order, the optional implementations or embodiments can be arbitrarily combined, and can be arbitrarily combined with any steps of other implementation or other embodiments.

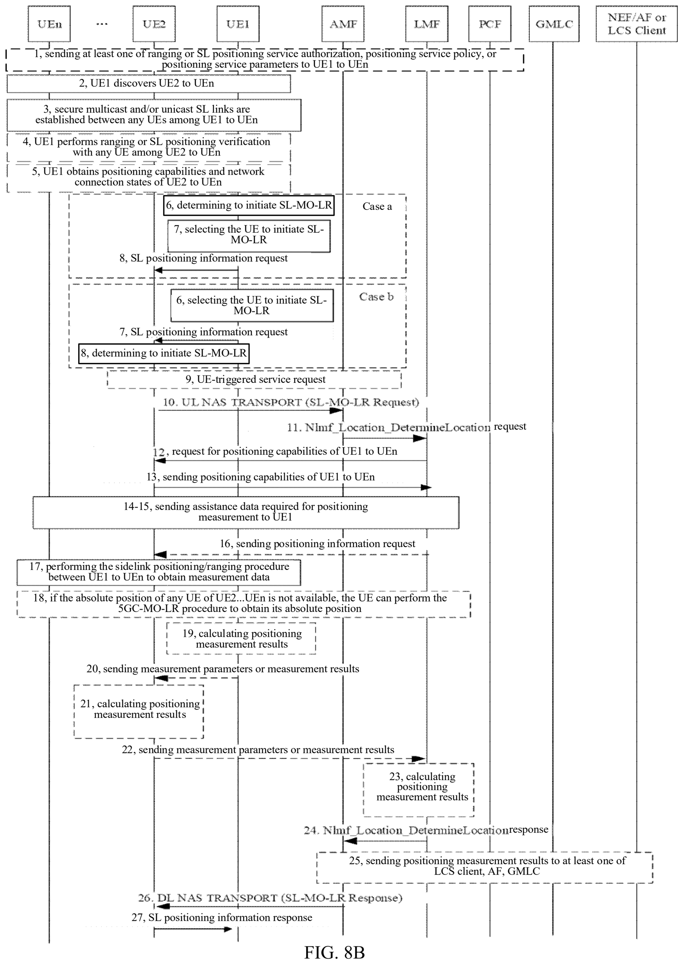

FIG. 8B shows an interactive flowchart of a positioning method according to an embodiment of the present disclosure. As shown in FIG. 8B, the method includes the following steps.

1-5, the target UE executes steps 1 to 5 of the SL-MO-LR procedure in TS 23.273 (i.e., steps 1 to 5 in FIG. 1B above), and makes the following modifications.
- UE1 (i.e., the first terminal mentioned above) is the target UE that cannot establish a NAS connection or cannot be served by an LMF with the ranging/SL positioning capability, and UE2/.../UEn is a located UE or an SL reference UE, so that at least one of UE2/.../UEn is within a coverage range and can be served by the LMF with the ranging/SL positioning capability.

Step 5, UE1 obtains the capabilities of UE2 to UEn (UE2 to UEn are the aforementioned fourth terminals) and network connection states of UE2 to UEn. For example, UE2 has a NAS connection, while UE 3 does not have a NAS connection. For a located UE that does not have a NAS connection, if an absolute position of the located UE is known, the located UE also sends an indication of its absolute position or the absolute position being known to the target UE.

Case a: UE1 decides to execute SL-MO-LR and selects UE2 (the third terminal mentioned above) to initiate SL-MO-LR on its behalf.

6, based on the sidelink positioning capability of UE1 and the information received in step 4 and step 5, if at least one of the discovered UE2/.../UEn is within the network coverage and can be served by the LMF with the ranging/SL positioning capability, UE1 determines that SL-MO-LR is to be performed. UE1 also selects the located UE to perform ranging. At least one of the selected located UEs should has the NAS connection. If the located UE does not have the NAS connection, the target UE only selects the located UE with the known absolute position.

7, UE1 also selects one of UE2/.../UEn to initiate SL-MO-LR on its behalf, based on the information obtained in the previous steps, including the capabilities and the network connection states. For example, UE1 selects UE2, which is within the network coverage and can be served by the LMF with the ranging/SL positioning capability.

8, UE1 sends an SL positioning information request to UE2 selected in the previous step, requesting its absolute position. In this request, a routing identifier, a QoS requirement, a target UE ID (such as GPSI), and the capabilities and the network connection states of UE1 to UEn (UE2's information may not be required) may be included. It may also indicate any required assistance data, to indicate whether position calculation assistance is required, and whether the position result should be transmitted to the LCS client or the AF.

Case b: UE1 sends the capability, UE2 decides to execute SL-MO-LR
6, UE1 selects one of UE2/.../UEn (e.g., UE2) with the NAS connection based on the information including capabilities and the network connection states obtained in the previous step. For example, UE1 selects UE2, which is within the network coverage and can be served by the LMF with the ranging/SL positioning capability. UE1 also selects a located UE to perform ranging. At least one of the selected located UEs should have the NAS connection. If the located UE does not have the NAS connection, the target UE only selects a located UE with the known absolute position.

7, UE1 sends an SL positioning information request to UE2 selected in the previous step, requesting its absolute location. The request may include a routing identifier, a QoS requirement, a target UE ID (such as GPSI), and the capabilities and the network connection states of UE1 to UEn (UE2's information may not be required).

8, based on the sidelink positioning capabilities and network connection states of UE1 to UEn, UE2 determines to perform SL-MO-LR.

9-26, UE2 performs steps 7-15 of the SL-MO-LR procedure on behalf of UE1, with the following adaptations.
- Step 9, if UE2 is in a CM-IDLE state, UE2 initiates a UE-triggered service request to establish a signaling connection with the serving AMF of UE2.
- Step 10, UE2 sends a supplementary service SL-MO-LR request to the serving AMF in a UL NAS transport message. The SL-MO-LR request indicates the other UE1 to UEn (using the application layer ID, such as GPSI), which may indicate the capabilities and the network connection states of UE1 to UEn, indicate any assistance data required, indicate whether position calculation assistance is required, and indicate whether the position result should be transmitted to the LCS client or the AF. In order to transmit to the LCS client or the AF, details of the LCS client or the AF (and possible GMLC) and the application layer IDs of all UEs are also included. For position calculation assistance from the LMF, a preferred type of the sidelink positioning/ranging position result (e.g., absolute position, relative position, or distance and direction between UE pairs) and the required QoS are included.
- Step 11, the serving AMF selects the LMF for serving UE2 (e.g., an LMF supporting sidelink positioning/ranging) and sends a Nlmf_Location_determineLocation service operation to the LMF using the information from the SL-MO-LR request.
- Step 12, the LMF sends a request for the capabilities of all UE1 to UEn to UE2.
- Step 13, if not all UEs have the NAS connection, UE2 returns the capabilities of UE1 to UEn to the LMF.

Note: if the SL-MO-LR request in step 10 contains the capabilities of UE1 to UEn, steps 12 and 14 can be skipped.

Step 14, UE2 may send a request for specific assistance data to the LMF.

Step 15, the LMF sends the requested assistance data to UE2. The assistance data can help UE1 to UEn obtain sidelink position measurement results, and/or can help UE1 or UE2 calculate the sidelink positioning/ranging position results.

Note 1: if UE2 includes a message including the capabilities of UE1 to UEn in the SL-MO-LR request of step 10, steps 12 and 13 may be omitted. If UE2 includes a message including a request for specific assistance data in the SL-MO-LR request of step 10, step 14 may be omitted.
- Step 16, if the SL-MO-LR request in step 10 indicates that position calculation assistance is required and/or indicates that the sidelink positioning/ranging position result needs to be transmitted to the LCS client or the AF, the LMF sends a position information request to UE2, which may include position information request(s) to UE1 or UE1 to UEn.
- Step 17, UE2 sends a request to UE1 to perform the sidelink positioning/ranging procedure between UE1 to UEn. If the calculation is performed on UE1, it may include assistance data (if received in step 15) and requested position information (if received in step 16).

UE1 initiates the sidelink positioning/ranging procedure between UE1 to UEn, in which UE1 to UEn obtain sidelink position measurement values and UE2 to UEn transmit their sidelink position measurement values to UE1.
- Step 18, if the absolute position information of UE1 is required and if the absolute positions of UE2...UEn are not available, UE2...UEn with the NAS connection can perform the 5GC-MO-LR procedure to obtain their absolute positions.

Step 19, if UE1 does not decide to request assistance from the LMF, or the LMF decides to use UE-based calculation, UE1 calculates the sidelink positioning/ranging position results for itself and each of UE2 to UEn based on the sidelink position measurement in step 17 and possibly using the assistance data received in step 15. The sidelink positioning/ranging position results may include absolute positions, relative positions, or ranges and directions associated with UE1 to UEn.
- Step 20:

If the calculation is not performed on UE1 (it may be on UE2 or the LMF), UE1 provides the measurement values of the sidelink positioning/ranging between UE1 and UE2 to UEn, and the absolute positions of UE2 to UEn to UE2 if UE2 does not know the absolute position of the located UE. (It may be the case that the absolute position of the located UE is only transmitted to UE1, and UE2 does not have such information. Or not all the absolute position information is provided in the assistance data of step 14)

Alternatively, if the calculation is performed on UE1, and UE1 receives a position information request from UE2, that is received by UE2 in step 16. UE1 provides UE2 with the result of the sidelink positioning/ranging between UE1 and UE2.

Step 21, UE2 calculates the sidelink positioning/ranging position results for itself and each of UE2 to UEn based on the sidelink position measurement in step 20 and possibly using the assistance data received in step 15.

Step 22, if UE2 receives a request for position information in step 16, UE2 sends a response to the LMF and includes the sidelink position measurement and the absolute position of the located UE without the NAS connection, or the result of step 19 (if performed).
- Step 23, if step 22 occurs, and if position calculation assistance is requested from the LMF in step 10, the LMF calculates the sidelink positioning/ranging position results of UE1 to UEn. The sidelink positioning/ranging position results may include the absolute positions, the relative positions, or the ranges and directions associated with UE1 to UEn.

Step 24, the LMF returns a Nlmf Location determineLocation service operation response to the AMF, which includes any side link positioning/ranging position result received in step 22 or calculated in step 23.
- Step 25, if a sidelink positioning/ranging position result is received in step 22, the AMF performs steps 7-12 of clause 6.2 to send the sidelink positioning/ranging position result to the GMLC and, if requested in step 10, to the AF or the LCS client. The sidelink positioning/ranging position result includes global identities of UE1 to UEn received in step 10.

NOTE 2: sending the position results and the global identities of UE1 to UEn to the AF or the LCS client may require privacy verification from UE1 to UEn and/or from the HPLMN of UE1 to UEn.

Step 26, if step 23 is performed, the LMF returns a supplementary service SL-MO-LR response to UE1 in a DL NASTRANSPORT message and includes any side link positioning/ranging position results calculated in step 23.

Step 27, UE2 sends an SL positioning information provision message containing the position of the target UE to UE1.

Each of the transmission protocols between UE1 and UE2 and between UE2 and the LMF can be RSPP, application layer protocol, PC5-U or PC5-S.

In the SL positioning procedure for the target UE without the NAS connection, the located UE without the NAS connection but with the known absolute position can be supported.

In combination with the above content, it can be seen that the following three points can be achieved in the embodiments of the present disclosure:
1. steps 6-8, the target UE without the NAS connection selects a located UE with the NAS connection from all located UEs, and the selected located UE performs SL-MO-LR on behalf of the target UE to support the case where of not all located UEs.
2. steps 20 and 22, the selected located UE sends the sidelink positioning/ranging measurement with the absolute position of the located UE to the selected UE2 and the LMF, and the located UE has no NAS connection or results.
3. any of the transmission protocols between UE1 and UE2 and between UE2 and the LMF can be RSPP, application layer protocol, PC5-U or PC5-S.

The embodiments of the present disclosure also propose an apparatus for implementing any of the above methods, for example, an apparatus is proposed, the above apparatus includes units or modules for implementing various steps performed by the terminal in any of the above methods. For another example, an apparatus is proposed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

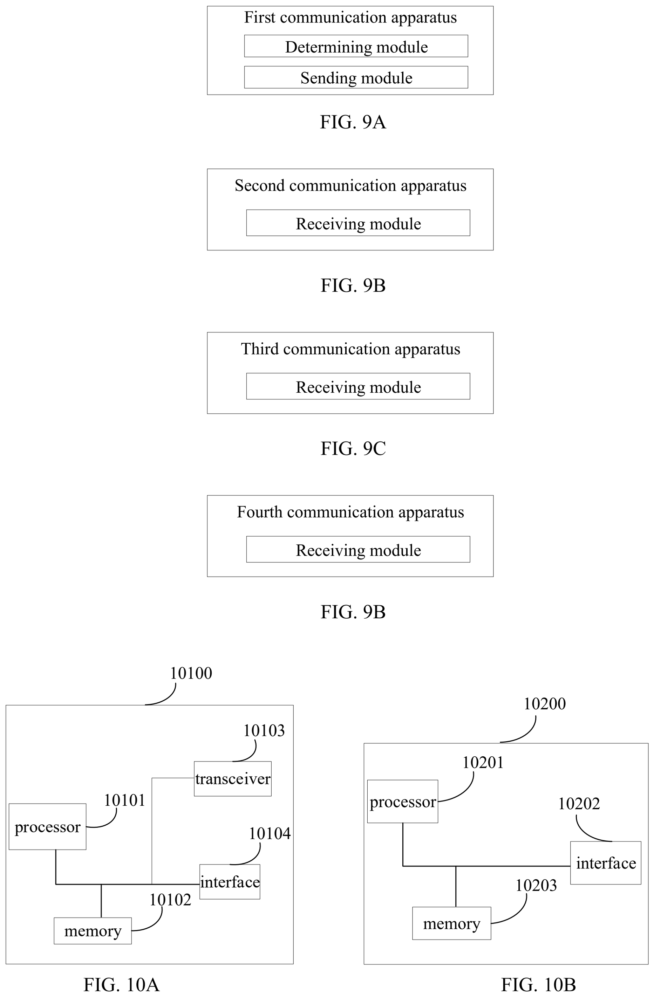

FIG. 9A is a schematic diagram of a first communication apparatus proposed in an embodiment of the present disclosure. As shown in FIG. 9A, the first communication apparatus includes: a determining module, configured to select a third terminal from at least one second terminal discovered by the first terminal, in which the first terminal is incapable of communicating with a first network element and requires assistance of the first network element to complete a positioning procedure of the first terminal, and the third terminal is capable of communicating with the first network element; a sending module, configured to send first information to the third terminal, in which the first information is used to request the third terminal to initiate a first procedure to the first network element, and the first procedure is used to determine a positioning measurement result of the first terminal. Optionally, the first communication apparatus also includes a receiving module, and the above-mentioned receiving module is used to execute the steps related to receiving performed by the first terminal 101 in any of the above methods, which will not be repeated here.

FIG. 9B is a schematic diagram of a second communication apparatus proposed in an embodiment of the present disclosure. As shown in FIG. 9B, the second communication apparatus includes: a receiving module, configured to receive first information sent by a first terminal, in which the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal. Optionally, the second communication apparatus also includes at least one of a determining module or a sending module, and the above-mentioned determining module is used to execute the steps related to determining performed by the third terminal 103 in any of the above methods, and the above-mentioned sending module is used to execute the steps related to sending performed by the third terminal 103 in any of the above methods, which will not be repeated here.

FIG. 9C is a schematic diagram of a third communication apparatus proposed in an embodiment of the present disclosure. As shown in FIG. 9C, the third communication apparatus includes: a receiving module, configured to receive a second request sent by a third terminal, in which the second request is used to initiate a first procedure to the first network element, the first procedure is used to determine a positioning measurement result of a first terminal, the first terminal is incapable of communicating with a first network element and requires assistance of the first network element to complete a positioning procedure of the first terminal. Optionally, the third communication apparatus also includes at least one of a determining module or a sending module, and the above-mentioned determining module is used to execute the steps related to determining performed by the first terminal 1021 in any of the above methods, and the above-mentioned sending module is used to execute the steps related to sending performed by the first terminal 1021 in any of the above methods, which will not be repeated here.

FIG. 9D is a schematic diagram of a fourth communication apparatus proposed in an embodiment of the present disclosure. As shown in FIG. 9D, the fourth communication apparatus includes: a receiving module, configured to receive a fourth request sent by a first network element, in which the fourth request is used to request a positioning measurement result of a first terminal, the first terminal is incapable of communicating with the first network element and requires assistance of the first network element to complete a positioning procedure of the first terminal. Optionally, the fourth communication apparatus also includes at least one of a determining module or a sending module, and the above-mentioned determining module is used to execute the steps related to determining performed by the second network element 1022 in any of the above methods, and the above-mentioned sending module is used to execute the steps related to sending performed by the second network element 1022 in any of the above methods, which will not be repeated here.

FIG. 10A is a schematic diagram of a communication device 10100 proposed in an embodiment of the present disclosure. The communication device 10100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 10100 may be used to implement the method described in the above method embodiments, and for details, reference may be made to the description in the above method embodiments.

As shown in FIG. 10A, the communication device 10100 includes one or more processors 10101. The processor 10101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The processor 10101 is used to call instructions so that the communication device 10100 executes any of the above methods.

In some embodiments, the communication device 10100 further includes one or more memories 10102 for storing instructions. Optionally, all or part of the memory 10102 may be outside the communication device 10100.

In some embodiments, the communication device 10100 further includes one or more transceivers 10103. When the communication device 10100 includes one or more transceivers 10103, the communication steps such as sending and receiving in the above methods are performed by the transceiver 10103, and the other steps are performed by the processor 10101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 10100 further includes one or more interface circuits 10104, which are connected to the memory 10102. The interface circuit 10104 may be used to receive signals from the memory 10102 or other apparatuses, and may be used to send signals to the memory 10102 or other apparatuses. For example, the interface circuit 10104 may read instructions stored in the memory 10102 and send the instructions to the processor 10101.

The communication device 10100 described in the above embodiments may be a network device or a terminal, but the scope of the communication device 10100 described in the present disclosure is not limited thereto, and the structure of the communication device 10100 may not be limited by FIG. 10A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 10B is a schematic diagram of a chip 10200 proposed in an embodiment of the present disclosure. In case where the communication device 10100 may be a chip or a chip system, reference may be made to the schematic diagram of the chip 10200 shown in FIG. 10B, but the present disclosure is not limited thereto.

The chip 10200 includes one or more processors 10201, and the processor 10201 is used to call instructions so that the chip 10200 executes any of the above methods.

In some embodiments, the chip 10200 further includes one or more interface circuits 10202, which are connected to the memory 10203. The interface circuit 10202 may be used to receive signals from the memory 10203 or other apparatuses, and the interface circuit 10202 may be used to send signals to the memory 10203 or other apparatuses. For example, the interface circuit 10202 may read instructions stored in the memory 10203 and send the instructions to the processor 10201. Optionally, the terms such as "interface circuit", "interface", "transceiver pin", and "transceiver" may be exchangeable with each other.

In some embodiments, the chip 10200 further includes one or more memories 10203 for storing instructions. Optionally, all or part of the memory 10203 may be outside the chip 10200.

The present disclosure also proposes a storage medium, on which instructions are stored, and when the instructions are executed on the communication device 10100, the communication device 10100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 10100, enables the communication device 10100 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A positioning method, performed by a first terminal, comprising:
selecting, by the first terminal, a third terminal from at least one second terminal discovered by the first terminal, wherein the first terminal is incapable of communicating with a first network element and requires assistance of the first network element to complete a positioning procedure of the first terminal, and the third terminal is capable of communicating with the first network element; and
sending first information to the third terminal, wherein the first information is used to request the third terminal to initiate a first procedure to the first network element, and the first procedure is used to determine a positioning measurement result of the first terminal.

2. The method of claim 1, further comprising:
receiving second information sent by all or part of the at least one second terminal, wherein the second information comprises at least one of:
a positioning capability of a second terminal;
a first indication indicating whether a second terminal is capable of communicating with the first network element;
a second indication indicating whether a second terminal knows an absolute position of the second terminal;
an absolute position of a second terminal; or
a network element identifier corresponding to a second network element.

3. The method of claim 1 or 2, wherein selecting the third terminal from the at least one second terminal discovered by the first terminal comprises:
selecting, from the at least one second terminal, a terminal capable of communicating with the first network element as the third terminal; or
determining, from the at least one second terminal, a second terminal that is capable of communicating with the first network element and sends second information comprising a network element identifier the same as a network element identifier of a second network element stored in the first terminal as the third terminal.

4. The method of any of claims 1-3, further comprising at least one of:
selecting at least one fourth terminal from the at least one second terminal based on the second information, wherein a fourth terminal is used to implement a positioning measurement for the first terminal, and the fourth terminal satisfies at least one of:
being capable of communicating with the first network element; or
an absolute position of the fourth terminal being known.

5. The method of any of claims 1-4, wherein requiring the assistance of the first network element to complete the positioning procedure of the first terminal comprises at least one of:
requiring the first network element to select a second network element, wherein the second network element is used to send third information for assisting positioning;
requiring the first network element to select a second network element, wherein the second network element is used to calculate the positioning measurement result of the first terminal; or
requiring the first network element to send the positioning measurement result of the first terminal to a third network element.

6. The method of any of claims 1-5, wherein the first information comprises at least one of:
a first requirement, wherein the first requirement comprises at least one of: a category, an accuracy, or a response time of the first requirement;
a terminal identifier of the first terminal;
a terminal identifier of a fourth terminal;
a third indication indicating whether a fourth terminal is capable of communicating with the first network element;
a fourth indication indicating a calculation entity for calculating the positioning measurement result of the first terminal, wherein the calculation entity comprises any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal; or
a positioning capability of a fourth terminal.

7. The method of claim 6, wherein the first requirement is a service quality requirement during a positioning measurement, the category of the first requirement indicates a degree of strictness of the service quality requirement during the positioning measurement, the accuracy indicates an accuracy requirement during the positioning measurement, and the response time indicates a response requirement during the positioning measurement.

8. The method of any of claims 4-7, further comprising:
obtaining measurement data by communicating with at least one fourth terminal to perform the positioning measurement.

9. The method of claim 8, further comprising:
calculating the positioning measurement result of the first terminal based on at least one of the measurement data or the absolute position of the fourth terminal, wherein a calculation entity for calculating the positioning measurement result of the first terminal is the first terminal.

10. The method of claim 8, further comprising:
receiving third information for assisting positioning sent by the third terminal, wherein a calculation entity for calculating the positioning measurement result of the first terminal is the first terminal; and
calculating the positioning measurement result of the first terminal based on at least one of the measurement data, the third information or the absolute position of the fourth terminal.

11. The method of claim 9 or 10, further comprising:
sending the positioning measurement result of the first terminal to the third terminal, wherein the positioning measurement result of the first terminal needs to be sent to a third network element.

12. The method of claim 8, further comprising:
sending at least one of the measurement data or the absolute position of the fourth terminal to the third terminal, wherein a calculation entity for calculating the positioning measurement result of the first terminal is not the first terminal; and
receiving the positioning measurement result of the first terminal sent by the third terminal.

13. The method of any of claims 8-12, further comprising:
receiving a first request sent by the third terminal, wherein the first request is used to request at least one of the positioning measurement result of the first terminal, the measurement data, or the absolute position of the fourth terminal.

14. The method of any of claims 1-13, further comprising:
exchanging, by the first terminal, at least one of the first information, measurement data, an absolute position of a fourth terminal, or the positioning measurement result with the third terminal based on a first protocol.

15. The method of claim 14, wherein the first protocol comprises at least one of:
an application layer protocol;
a ranging and sidelink positioning protocol (RSPP);
a PC5 control plane signaling (PC5-S) protocol; or
a PC5 user plane (PC5-U) protocol.

16. A positioning method, performed by a third terminal, comprising:
receiving first information sent by a first terminal, wherein the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal.

17. The method of claim 16, wherein the third terminal is selected by the terminal from at least one second terminal discovered by the first terminal;
wherein the third terminal is a terminal among the at least one second terminal that is capable of communicating with the first network element; or
the third terminal is a terminal among the at least one second terminal that is capable of communicating with the first network element and sends second information comprising a network element identifier the same as a network element identifier of a second network element stored in the first terminal.

18. The method of claim 16 or 17, further comprising at least one of:
determining, by the third terminal, to initiate the first procedure; or
sending, by the third terminal, a second request to the first network element, wherein the second request is used to initiate the first procedure to the first network element.

19. The method of claim 18, wherein the second request comprises at least one of:
a first requirement, wherein the first requirement comprises at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, wherein the calculation entity comprises any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal;
a positioning capability of the third terminal; or
a network element identifier corresponding to a second network element with which the third terminal is capable of communicating.

20. The method of claim 18 or 19, further comprising:
receiving third information for assisting positioning sent by the second network element.

21. The method of any of claims 17-20, further comprising:
sending the third information to the first terminal, wherein a calculation entity for calculating the positioning measurement result of the first terminal is the first terminal.

22. The method of any of claims 17-21, further comprising:
receiving the positioning measurement result of the first terminal sent by the first terminal, wherein the positioning measurement result of the first terminal needs to be sent to a third network element; and
sending the positioning measurement result of the first terminal to the second network element.

23. The method of any of claims 17-22, further comprising:
receiving at least one of measurement data or an absolute position of a fourth terminal sent by the first terminal, wherein a calculation entity for calculating the positioning measurement result of the first terminal is the third terminal;
calculating the positioning measurement result of the first terminal based on at least one of the measurement data, third information or the absolute position of the fourth terminal; and
sending the positioning measurement result of the first terminal to the first terminal.

24. The method of claim 23, further comprising:
sending the positioning measurement result of the first terminal to the second network element, wherein the positioning measurement result of the first terminal needs to be sent to a third network element.

25. The method of any of claims 17-20, further comprising:
receiving at least one of measurement data or an absolute position of a fourth terminal sent by the first terminal, wherein a calculation entity for calculating the positioning measurement result of the first terminal is the second network element;
sending the at least one of the measurement data or the absolute position of the fourth terminal to the second network element;
receiving the positioning measurement result of the first terminal sent by at least one of the second network element or the first network element; and
sending the positioning measurement result of the first terminal to the first terminal.

26. The method of any of claims 17-25, further comprising at least one of:
receiving a third request sent by the second network element, wherein the third request is used to request at least one of the positioning measurement result of the first terminal, measurement data, or an absolute position of a fourth terminal; or
sending a first request to the first terminal, wherein the first request is used to request at least one of the positioning measurement result of the first terminal, measurement data, or an absolute position of a fourth terminal.

27. The method of any of claims 16-26, further comprising at least one of:
exchanging, by the third terminal, at least one of the first information, measurement data, an absolute position of a fourth terminal, or the positioning measurement result with the first terminal based on a first protocol; or
exchanging, by the third terminal, at least one of measurement data, an absolute position of a fourth terminal, or the positioning measurement result with a second network element based on a first protocol.

28. A positioning method, performed by a first network element, comprising:
receiving a second request sent by a third terminal, wherein the second request is used to initiate a first procedure to the first network element, the first procedure is used to determine a positioning measurement result of a first terminal, the first terminal is incapable of communicating with the first network element and requires assistance of the first network element to complete a positioning procedure of the first terminal.

29. The method of claim 28, further comprising:
sending a fourth request to a second network element, wherein the fourth request is used to request the positioning measurement result of the first terminal.

30. The method of claim 28 or 29, wherein the fourth request comprises at least one of:
a first requirement, wherein the first requirement comprises at least one of: a category, an accuracy, or a response time of the first requirement;
a terminal identifier of the first terminal;
a terminal identifier of the third terminal;
a terminal identifier of a fourth terminal;
a third indication indicating whether a fourth terminal is capable of communicating with the first network element;
a fourth indication indicating a calculation entity for calculating the positioning measurement result of the first terminal, wherein the calculation entity comprises any one of the first terminal, the third terminal, or a second network element;
a fifth indication indicating third information for assisting positioning during the positioning procedure;
a sixth indication indicating whether at least one of the positioning measurement result of the first terminal or an absolute position of a fourth terminal needs to be sent to a third network element;
a seventh indication indicating a network element identifier of a third network element;
an eighth indication indicating a type of the positioning measurement result expected by the first terminal;
a positioning capability of the first terminal;
a positioning capability of a fourth terminal; or
a positioning capability of the third terminal.

31. The method of any of claims 28-30, further comprising at least one of:
receiving the positioning measurement result of the first terminal sent by a second network element;
sending the positioning measurement result of the first terminal to the third terminal; or
sending the positioning measurement result of the first terminal to the third network element, wherein the positioning measurement result of the first terminal needs to be sent to a third network element.

32. A positioning method, performed by a second network element, comprising:
receiving a fourth request sent by a first network element, wherein the fourth request is used to request a positioning measurement result of a first terminal, the first terminal is incapable of communicating with the first network element and requires assistance of the first network element to complete a positioning procedure of the first terminal.

33. The method of claim 32, further comprising:
sending third information for assisting positioning a third terminal.

34. The method of claim 32 or 33, further comprising:
sending a third request to a third terminal, wherein a calculation entity for calculating the positioning measurement result of the first terminal is the first terminal or the third terminal, the positioning measurement result of the first terminal needs to be sent to a third network element, and the third request is used to request the positioning measurement result of the first terminal;
receiving the positioning measurement result of the first terminal sent by the third terminal; and
sending the positioning measurement result of the first terminal to the first network element.

35. The method of claim 32 or 33, further comprising:
sending a third request to a third terminal, wherein a calculation entity for calculating the positioning measurement result of the first terminal is a second network element, and the third request is used to request at least one of measurement data or an absolute position of a fourth terminal;
receiving the at least one of the measurement data or the absolute position of the fourth terminal sent by the third terminal;
calculating the positioning measurement result of the first terminal based on at least one of the measurement data, third information or the absolute position of the fourth terminal; and
sending the positioning measurement result of the first terminal to the third terminal.

36. The method of claim 35, further comprising:
sending the positioning measurement result of the first terminal to the first network element, wherein the positioning measurement result of the first terminal needs to be sent to a third network element.

37. The method of any of claims 32-36, further comprising:
exchanging, by the second network element, at least one of measurement data, an absolute position of a fourth terminal, or the positioning measurement result with the third terminal based on a first protocol.

38. A positioning method, performed by a communication system, comprising:
sending, by a third terminal, a second request to a network device, wherein the second request is used to initiate a first procedure to the network device, the first procedure is used to determine a positioning measurement result of a first terminal, the first terminal is incapable of communicating with a first network element and requires assistance of the first network element to complete a positioning procedure of the first terminal.

39. A positioning method, performed by a core network device, comprising:
receiving a second request sent by a third terminal, wherein the second request is used to initiate a first procedure to the core network device, the first procedure is used to determine a positioning measurement result of a first terminal, the first terminal is incapable of communicating with the core network device and requires assistance of the first network element to complete a positioning procedure of the first terminal.

40. A first communication apparatus, comprising:
a determining module, configured to select a third terminal from at least one second terminal discovered by the first terminal, wherein the first terminal is incapable of communicating with a first network element and requires assistance of the first network element to complete a positioning procedure of the first terminal, and the third terminal is capable of communicating with the first network element; and
a sending module, configured to send first information to the third terminal, wherein the first information is used to request the third terminal to initiate a first procedure to the first network element, and the first procedure is used to determine a positioning measurement result of the first terminal.

41. A second communication apparatus, comprising:
a receiving module, configured to receive first information sent by a first terminal, wherein the first terminal is incapable of communicating with a first network element and requires assistance of the first network element to complete a positioning procedure of the first terminal, the first information is used to request the third terminal to initiate a first procedure to the first network element, and the first procedure is used to determine a positioning measurement result of the first terminal.

42. A third communication apparatus, comprising:
a receiving module, configured to receive a second request sent by a third terminal, wherein the second request is used to initiate a first procedure to the first network element, the first procedure is used to determine a positioning measurement result of a first terminal, the first terminal is incapable of communicating with a first network element.

43. A fourth communication apparatus, comprising:
a receiving module, configured to receive a fourth request sent by a first network element, wherein the fourth request is used to request a positioning measurement result of a first terminal, the first terminal is incapable of communicating with the first network element.

44. A communication device, comprising:
one or more processors;
wherein the processor is configured to call instructions to cause the communication device to perform the positioning method of any one of claims 1 to 15, 16-27, 28-31 or 32 to 37.

45. A communication system, comprising: a terminal and a network device,
wherein the terminal is configured to perform the positioning method of any one of claims 1 to 15 or 16-27, and the network device is configured to perform the positioning method of any one of claims 28-31 or 32 to 37.

46. A storage medium having instructions stored thereon, wherein when the instructions are executed on a communication device, the communication device is caused to perform the positioning method of any one of claims 1 to 15, 16-27, 28-31 or 32 to 37.
